# FASCICULE DE BREVET EUROPEEN

(11) **EP 3 172 727 B1**
(45) Date de publication et mention de la délivrance du brevet: **11.09.2019**
(21) Numéro de dépôt: 15741997.9
(22) Date de dépôt: 23.07.2015
(51) Int. Cl.: G08C 17/02

(54) **PROCÉDÉS DE DÉTERMINATION ET DE COMMANDE D'UN ÉQUIPEMENT À COMMANDER, DISPOSITIF, UTILISATION ET SYSTÈME METTANT EN OEUVRE CES PROCÉDÉS**
VERFAHREN ZUR BESTIMMUNG UND STEUERUNG EINES TEILS EINER ZU STEUERNDEN AUSRÜSTUNG SOWIE VORRICHTUNG, VERWENDUNG UND SYSTEM ZUR DURCHFÜHRUNG DER BESAGTEN VERFAHREN
METHODS FOR DETERMINING AND CONTROLLING A PIECE OF EQUIPMENT TO BE CONTROLLED, AND DEVICE, USE AND SYSTEM IMPLEMENTING SAID METHODS

(30) Priorité: 25.07.2014 FR 1457234
(43) Date de publication de la demande: 31.05.2017
(60) Demande divisionnaire: 19186715.9
(73) Titulaire: 7Hugs Labs, 92130 Issy-les-Moulineaux (FR)
(72) Inventeur: TCHEDIKIAN, Simon, 92130 Issy les Moulineaux (FR)
(74) Mandataire: IPAZ
(86) Numéro de dépôt international: PCT/EP2015/066839
(87) Numéro de publication internationale: WO 2016/012530

(56) Documents cités:
- EP-A2- 1 496 485
- FR-A1- 2 985 584
- US-A1- 2005 225 453

## Description

### Domaine technique

L'invention se situe dans le domaine des télécommandes. Plus précisément, l'invention concerne des procédés pour déterminer et commander un équipement à commander. L'invention concerne également une utilisation, un dispositif et un système mettant en oeuvre ces procédés.

### État de la technique antérieure

Il est connu de l'état de la technique des télécommandes pour déterminer et commander un équipement à commander à partir d'une détermination de la position de la télécommande sur une carte et de son orientation.

On connaît par exemple le document « Home Appliance Control System based on Robust Indoor User Localization using Wifi » des auteurs Dhao et al., publié par le journal « International Journal on Human Machine Interaction » en 2013. Ce document décrit un système comprenant une télécommande qui dans un mode automatique est pointée par un utilisateur vers un équipement. Dans ce mode automatique, l'utilisateur contrôle l'équipement pointé associé à la zone géographique dans lequel il est physiquement présent. Le document décrit un système déterminant l'équipement à partir de la localisation de l'utilisateur et de l'orientation de la télécommande.

Un tel système est aussi décrit dans la publication US2005/0225453.

Cette solution connue présente néanmoins diverses limitations. D'une part, le système a besoin d'un apprentissage de la position des équipements préalablement à l'utilisation de la télécommande.

D'autre part, un serveur doit stocker une carte de l'environnement qui contient des informations sur les planchers, les limites de zone, les murs, l'emplacement de chaque équipement, et la cartographie de l'association de zone à équipement. L'élaboration de cette carte est réalisée préalablement à l'utilisation de la télécommande. De plus, l'ajout, la suppression ou le déplacement d'équipement nécessite une mise à jour de la carte.

Enfin, la localisation de la télécommande est réalisée par apprentissage de toutes les zones (apprentissage appelé "fingerprinting"). Cet apprentissage doit être réalisé préalablement à l'utilisation de la télécommande et doit être réalisé régulièrement. Par exemple, l'ajout ou le déplacement d'une station WiFi dans l'environnement impose de réaliser un nouvel apprentissage selon l'enseignement de ce document. Cette méthode ne peut donc être utilisée pour un déploiement aisé chez des particuliers.

Pour référence, des technologies de localisation indoor (pour l'anglais à l'intérieur) sont connues telles que UWB ou EMF.

La technologie UWB (pour l'anglais « Ultra Wide Band ») est une technologie qui permet de géolocaliser des objets en intérieur avec une précision de l'ordre de quelques centimètres à quelques dizaines de centimètres. Pour déterminer l'orientation, une autre technologie est nécessaire.

La technologie EMF (pour l'anglais « Electromagnetic field ») » est une autre technologie, apte à déterminer position et orientation. La portée d'une telle technologie est de l'ordre de 2,5 à 5 mètres. Cette technologie est bien exposée dans le document US6073043.

### Exposé de l'invention

La domotique existe depuis plusieurs dizaines d'années. Le confort apporté par les produits domotiques est significatif : contrôle des lumières, volets, portails, du chauffage, objets connectés, etc. Cependant, la domotique n'a jamais réussi à dépasser le microcosme des technophiles pour atteindre le grand public. Ceci est principalement dû à la complexité de configuration et d'usage de tous ces produits. Quelques initiatives comme les ampoules Hue de Philips ou l'application iPhone de Somfy pour contrôler des volets électriques ont eu un certain succès auprès du public. Cependant ces initiatives sont encore limitées à une seule application : chaque télécommande ne fonctionne qu'avec l'équipement avec lequel il a été fourni, et ne fonctionne pas pour contrôler d'autres produits.

Certains acteurs proposent des télécommandes domotiques multi-usages afin de pouvoir contrôler plusieurs équipements à la fois, mais ces produits sont très compliqués à configurer. Il faut associer des boutons de la télécommande à des actions précises : bouton 1 pour allumer/éteindre lampe du salon, bouton 2 pour baisser le chauffage, bouton 3 pour augmenter le chauffage, etc. Il devient vite difficile de retenir à quelle fonction est associée le bouton.

Il existe également l'essor des applications domotiques pour smartphone ou tablettes. Celles-ci permettent à l'utilisateur de naviguer au sein de menu et d'accéder à l'équipement qu'il souhaite contrôler. Cette solution est plus ergonomique pour l'utilisateur, mais reste contraignante. Par exemple, pour allumer la lumière dans le salon, l'utilisateur doit allumer son smartphone ou sa tablette, sélectionner l'application de domotique, aller dans le menu contrôle des lumières ou dans le menu « salon », sélectionner l'ampoule qu'il souhaite contrôler, appuyer sur le bouton « allumer ». Le nombre d'étapes pour allumer une ampoule reste trop important et l'utilisateur doit se souvenir de l'emplacement des équipements à commander au sein des menus et sous-menus de l'application.

Un but de l'invention est de permettre de contrôler tout ce qui est contrôlable dans une maison sans aucune configuration compliquée et sans avoir besoin de passer par un grand nombre d'étapes.

Un but de l'invention est notamment de remédier à tout ou partie des inconvénients précités en proposant un procédé de détermination d'un équipement à commander par un objet de commande transportable disposée dans un espace comprenant des unités de positionnement. À cet effet, l'invention repose sur la mise en oeuvre des unités de localisation apte à déterminer leurs positions relatives les unes par rapport aux autres.

Ces unités de localisation peuvent par exemple mettre en oeuvre des puces de localisation en environnement fermé basées sur la technologie ultra-large bande (UWB, pour l'anglais « Ultra Wide Band »).

La localisation de ces unités de localisation peut par ailleurs être réalisée à partir de procédés de latération, trilatération ou multilatération.

Une idée qui est à la base de l'invention consiste à associer ces unités de localisation et un objet de commande transportable. Selon l'invention, l'objet de commande transportable peut avantageusement être apte à déterminer sa position relative par rapport aux différentes unités de localisation.

Les mêmes procédés bien connus qui permettent aux unités de positionnement de déterminer leurs positions position relatives les unes par rapport aux autres permettent à la télécommande ou à un dispositif tiers de connaître la position relative de la télécommande par rapport aux différentes unités de localisation.

Dans toute la suite du document, il est entendu que la notion de commande d'un équipement peut se résumer à l'obtention par la télécommande d'une interface de commande relative à cet équipement.

La notion de commande d'un équipement peut en outre se résumer à une simple commande d'information relative de ce dernier. Ainsi, on entend par commande d'un four par une télécommande la possibilité de pointer cette télécommande vers ce four dans le but d'obtenir le temps restant de cuisson même si il n'est pas possible de commander physiquement le four. Il s'agit d'une commande d'interrogation du four.

La notion de commande d'un équipement peut également revêtir la commande réelle et physique de cet équipement.

Plus généralement, toute interaction avec l'équipement sera entendue comme une commande de ce dernier.

Ainsi, suivant un premier aspect de l'invention, il est proposé un procédé de détermination d'un équipement à commander par un objet de commande transportable disposé dans un espace comprenant une unité de positionnement apte à déterminer la position relative de l'objet de commande par rapport à cette unité de positionnement, le procédé comprenant:
- une étape de détermination de la position et de l'orientation dudit objet de commande dans ledit espace à partir de la position de l'au moins une unité de positionnement,
- une étape de détermination d'une direction et d'un sens pointé par l'objet de commande à partir des position et orientation de l'objet de commande ainsi déterminées,
- une étape de détermination d'un équipement à commander dans l'espace à partir des direction et sens ainsi déterminés.

Selon une particularité de l'invention, l'étape de détermination d'un équipement à commander comprend une notification de cette détermination à un utilisateur du procédé de commande. De préférence, cette notification est réalisée par une émission d'un son ou d'une vibration par l'objet de commande. Avantageusement, l'émission d'un son ou d'une vibration par l'objet de commande permet à un utilisateur du procédé de détermination d'un équipement à commander de repérer les objets dans l'espace sans regarder l'objet de commande.

Avantageusement, ledit objet de commande peut être une télécommande.

Avantageusement, l'espace peut comprendre une pluralité d'unité de positionnement aptes à déterminer leurs positions relatives les unes par rapport aux autres.

La détermination par une unité de positionnement de sa position par rapport à une autre unité de positionnement peut générer une notification d'informations relatives à cette détermination à destination d'un utilisateur du procédé de détermination. Ces informations peuvent par exemple être affichées sur un afficheur de l'objet de commande. Ces informations peuvent alerter l'utilisateur sur un mauvais positionnement d'une ou plusieurs des unités de positionnements. Ce peut par exemple être le cas lorsqu'un obstacle ou un mur est situé entre deux unités de positionnements. Ce peut être le cas (aussi ou alternativement) lorsque trois unités de positionnements sont alignées : l'alignement de trois unités de positionnement diminue la précision de la détermination de la position et/ou de l'orientation de l'objet de commande.

Ainsi, la mise en oeuvre d'unités de localisation aptes à déterminer leurs positions relatives les unes par rapport aux autres permet de déterminer un équipement sans devoir réaliser préalablement une carte de l'environnement qui contient des informations sur les planchers, les limites de zone, les murs, l'emplacement de chaque équipement, et la cartographie de l'association de zone à équipement.

Cependant, ce type d'information peut avantageusement être utilisé pour discriminer efficacement l'équipement à commander en fonction du couple position/orientation de l'objet de commande.

Un équipement peut être une prise électrique, un volet roulant, du matériel audiovisuel ou informatique, une alarme anti intrusion, un détecteur de fumée, un détecteur de CO, un détecteur de fumée, un thermostat, un portail, une serrure, un jouet tel qu'une voiture électrique, du matériel tel qu'une machine à café, un réveil, une horloge, un équipement de cuisine tel qu'un four, une hotte, un réfrigérateur, un lave-vaisselle, etc.

En outre, la modification du positionnement d'une unité de localisation ou l'ajout d'une nouvelle unité de localisation ne nécessite pas de réaliser un nouvel apprentissage pour déterminer la position de l'objet de commande dans l'espace relatif aux unités de localisation.

Avantageusement, l'étape de détermination de la position et/ou l'étape de détermination de l'orientation de l'objet de commande dans l'espace peut comprendre une étape d'évaluation du temps de trajet d'un signal radio entre l'objet de commande et une unité de positionnement, ou entre plusieurs unités de positionnement.

Avantageusement, l'étape de détermination de la position et/ou l'étape de détermination de l'orientation de l'objet de commande dans ledit espace peut comprendre une étape d'évaluation de la puissance de réception d'un signal radio par l'objet de commande ou par l'au moins une unité de positionnement.

Avantageusement, l'étape de détermination de la position et/ou l'étape de détermination de l'orientation de l'objet de commande dans l'espace peut comprendre une étape de détermination des angles de réception d'un signal radio par l'objet de commande ou par l'au moins une unité de positionnement.

Avantageusement, l'étape de détermination de la position et/ou l'étape de détermination de l'orientation de l'objet de commande dans ledit espace peut mettre en oeuvre une utilisation et une mesure de champs électromagnétiques.

Avantageusement, l'étape de détermination de la position de l'objet de l'objet de commande et/ou l'étape de détermination de l'orientation dans cet espace relatif peut mettre en oeuvre une étape de latération, trilatération ou multilatération.

De préférence, l'étape de détermination de la position de l'objet de commande dans ledit espace peut mettre en oeuvre une étape utilisant une technique mettant en oeuvre, des temps d'arrivée telle que la technique TOA et/ou des différences de temps d'arrivée telle que la technique TDOA et/ou des angles d'arrivée telle que la technique AOA, de signal radio.

Avantageusement, l'étape de détermination de la position et/ou l'étape de détermination de l'orientation de l'objet de commande dans cet espace relatif peut mettre en oeuvre une étape de triangulation.

De préférence, l'étape de détermination de la position et de l'orientation de l'objet de commande dans cet espace peut mettre en oeuvre une étape utilisant une mesure d'un champ électromagnétique.

Les distances entre l'objet de commande et les unités de positionnement peuvent être déterminées selon plusieurs procédés. Une première famille de tels procédés met en oeuvre un calcul du temps de trajet d'un signal radio entre l'objet de commande et les unités de positionnement. Une deuxième famille met en oeuvre un calcul de la puissance d'un signal radio en réception du côté des unités de positionnement ou de l'objet de commande. Une combinaison de ces procédés peut avantageusement être utilisée afin d'améliorer la précision de la localisation de l'objet de commande dans l'espace comprenant les unités de positionnement.

Avantageusement, le procédé selon l'invention peut comprendre une étape mettant en oeuvre une détermination de l'angle de réception d'un signal radio reçu par l'objet de commande ou par l'au moins une unité de positionnement. L'angle de réception du signal radio peut avantageusement améliorer la précision de la position et de l'orientation de l'objet de commande transportable pour un nombre d'unités de positionnement donné. L'angle de réception du signal radio peut avantageusement permettre de mettre en oeuvre une triangulation en utilisant moins d'unité de positionnement.

Avantageusement, le procédé selon l'invention peut comprendre une étape mettant en oeuvre une captation par l'objet de commande de grandeurs physique dans l'espace.

Une captation par l'objet de commande de grandeurs physiques dans l'espace peut avantageusement améliorer la précision de l'orientation de l'objet de commande. Les grandeurs physiques peuvent par exemple être captées par un accéléromètre, un gyroscope, ou un capteur de champ magnétique terrestre. Plusieurs grandeurs physiques peuvent être captées pour améliorer encore la précision de la détermination de la localisation et/ou de l'orientation de l'objet de commande. Un capteur de pression ou d'altitude pourrait encore améliorer ces déterminations.

Avantageusement, le procédé selon l'invention peut comprendre une étape mettant en oeuvre une captation par l'objet de commande de la distance entre ce dernier et un obstacle se situant dans le sens pointé par l'objet de commande.

Une captation par l'objet de commande de la distance entre ce dernier et un obstacle se situant dans le sens pointé par l'objet de commande peut avantageusement améliorer la précision.

Avantageusement, le procédé selon l'invention comprend une étape pour associer un référentiel lié à l'objet de commande à un référentiel lié à l'au moins une unité de positionnement. De préférence, l'étape d'association du référentiel lié à l'objet de commande au référentiel lié à l'au moins une unité de positionnement comprend pour chacune des unités de positionnement une étape comprenant un pointage par l'utilisateur de cet objet de commande vers une unité de positionnement et un appui de l'utilisateur sur l'objet de commande. Ainsi, lorsque l'étape de positionnement des unités de positionnement n'est pas réalisée dans le même référentiel que l'étape d'orientation de la télécommande, les deux référentiels sont liés. En ce cas, il peut être demandé à l'utilisateur de pointer certaines unités de positionnement et d'appuyer sur un bouton et de capturer l'orientation pour chaque unité de positionnement. Il est ainsi possible de lier l'orientation de la télécommande avec l'espace des unités de positionnement. De préférence, dans ce cas, chaque équipement à commander peut s'activer afin que l'utilisateur sache quel équipement à commander il doit pointer. L'activation peut être perçue par la mise en oeuvre d'un clignotement d'une ampoule, de la montée et/ ou l'abaissement de volets, etc.

Avantageusement, le procédé selon l'invention peut comprendre une étape pour définir une enveloppe virtuelle d'au moins un équipement à commander. L'étape de détermination d'un équipement à commander peut dans ce cas utiliser l'enveloppe virtuelle définie pour l'au moins un équipement à commander. Avantageusement, la définition de l'enveloppe virtuelle permet la mise en oeuvre d'une marge de tolérance de sorte que l'équipement à commander puisse être déterminé même si son enveloppe virtuelle n'est pas parfaitement pointée par l'objet de commande.

Avantageusement, l'enveloppe virtuelle peut être définie à partir d'une pluralité de déterminations de position et d'orientation de l'objet de commande dans l'espace. Par exemple, l'enveloppe virtuelle peut être définie par la détermination de l'enveloppe convexe de la projection des sens pointés sur un volume particulier. L'objet de commande peut mettre en oeuvre un procédé d'apprentissage de la localisation de l'équipement à commander par pointage de son enveloppe virtuelle. Il peut être demandé à l'utilisateur de pointer vers un même équipement ou une même enveloppe virtuelle dans l'espace de plusieurs positions différentes afin de pouvoir déterminer la position relative de l'équipement ou de l'enveloppe virtuelle dans l'espace.

Avantageusement, l'étape de détermination de l'enveloppe virtuelle peut comprendre une étape d'activation d'au moins un des équipements à commander afin de le rendre identifiable visuellement par l'utilisateur et une étape comprenant un pointage par l'utilisateur de l'objet de commande vers cet au moins un équipement et un appui de l'utilisateur sur l'objet de commande. Par exemple, pour commander des volets, il est possible de demander à l'utilisateur de pointer deux coins de la fenêtre, par exemple en haut à gauche et en bas à droite. L'enveloppe virtuelle délimite la zone de l'équipement à commander dans l'espace. Lorsque l'utilisateur pointe n' importe où sur la fenêtre, le système reconnaît que la zone pointée correspond au contrôle des volets.

Avantageusement, l'enveloppe virtuelle de l'au moins un équipement à commander peut comprendre au moins une partie de l'enveloppe physique de l'équipement à commander, de préférence toute l'enveloppe physique. Par exemple, l'enveloppe virtuelle d'une télévision peut alors comprendre au moins l'enveloppe physique de la télévision.

Alternativement et avantageusement, l'enveloppe virtuelle de l'au moins un équipement à commander peut ne comprendre aucun point de l'enveloppe physique de l'équipement à commander. Il est ainsi loisible de définir que l'équipement à commander, lorsque l'objet de commande pointe le coeur d'une cheminée d'un appartement, est le système de climatisation chaud/froid de l'appartement éventuellement situé dans une autre pièce que celle de la cheminée et non la cheminée pointée. L'utilisateur peut par exemple pointer la fenêtre pour avoir la météo extérieure affichée sur la télécommande. Il peut également commander des objets non directement visibles.

Avantageusement, le procédé selon l'invention peut comprendre une étape de déplacement d'un équipement à commander et une action d'un utilisateur sur l'objet de commande, l'action de l'utilisateur sur l'objet de commande étant suivie d'une nouvelle mise en oeuvre d'un procédé selon l'invention afin de déterminer la nouvelle enveloppe virtuelle dudit équipement déplacé. Cette nouvelle mise en oeuvre est de préférence réalisée de manière automatique dès qu'un test est vérifié. Le test peut par exemple comprendre une comparaison des distances précédemment déterminées entre tous les équipements et une nouvelle détermination des distances entre tous les équipements. Ainsi, lorsque l'utilisateur change une ampoule de place, sa nouvelle localisation est automatiquement prise en compte lors de l'appui sur une commande de la télécommande.

Alternativement, l'étape de détermination d'un équipement à commander peut comprendre une étape de détermination d'une probabilité qu'un équipement est l'équipement à commander. L'équipement à commander peut alors être déterminé à partir de cette probabilité. Cette détermination d'une probabilité peut avantageusement être mise en oeuvre pour déterminer l'équipement à commander lorsque le sens pointé ne correspond à aucune enveloppe virtuelle ou correspond à plus d'une enveloppe virtuelle. Ainsi lorsque l'objet de commande est pointé dans un sens et si le sens pointé ne correspond à aucun équipement alors un algorithme identifie l'équipement à commander qui en est le plus proche dans l'espace ou le plus probable en fonction de la position de l'objet de commande et du sens pointé.

Avantageusement, le procédé selon l'invention peut comprendre une étape d'enrichissement contextuel d'un équipement à commander par des données d'enrichissement et en ce que l'étape de détermination d'un équipement à commander met en oeuvre cet enrichissement contextuel. Cet enrichissement peut de préférence mettre en oeuvre des données de grandeurs physiques, l'heure, la date, la position de l'objet de commande, des réponses de l'utilisateur à des questions, ou la répétitivité de commandes effectuées par l'utilisateur. Par exemple, l'enrichissement contextuel peut être mis en oeuvre par une étape de demande à l'utilisateur de renseignement lié à l'équipement à commander. Cette demande peut être réalisée via une application mobile ou un logiciel de configuration sur un ordinateur. Le renseignement peut être de déterminer si l'ampoule est un plafonnier ou un lampadaire, ou de connaître l'étage auquel se situe chaque objet. Ainsi, cette information permet de déterminer la hauteur relative des unités de positionnement les unes par rapport aux autres.

De manière préférentielle, l'étape de détermination d'un équipement à commander peut comprendre une étape de détermination d'une probabilité. L'équipement à commander peut être alors déterminé à partir de cette probabilité. Par exemple, lorsqu'une direction et un sens déterminés pointent au moins deux enveloppes virtuelles, l'équipement déterminé peut être celui dont l'enveloppe virtuelle est la plus proche de l'objet de commande. Par exemple, lorsqu'une direction et un sens déterminés ne pointent vers aucune enveloppe virtuelle, la probabilité de chaque équipement est déterminée à partir de la distance entre son enveloppe virtuelle et la demi-droite définie par la direction. La notion de distance et de proximité dépend de la métrique utilisée. On peut utiliser une métrique telle que la plus petite distance euclidienne entre la droite définie par la direction déterminée et un point d'une enveloppe virtuelle. Ainsi, une étape de correction automatique est proposée : le procédé annule la commande préalablement émise et applique la commande à l'équipement à commander le plus probable.

L'invention a également pour objet un procédé de commande d'un équipement à commander parmi au moins un équipement à commander à partir d'un objet de commande Ce procédé de commande selon l'invention comprend une étape de détermination d'un équipement à commander mettant en oeuvre un procédé selon l'invention.

Avantageusement, le procédé de commande selon l'invention peut comprendre une étape d'émission par l'objet de commande de données de commande à destination de l'équipement à commander.

De préférence, l'étape de détermination de la position et de l'orientation de l'objet de commande et l'étape d'émission par l'objet de commande de données de commande à destination de l'équipement à commander peuvent mettre en oeuvre une même technologie radio.

Avantageusement, le procédé de commande selon l'invention peut émettre automatiquement des commandes à destination d'un équipement en fonction de sa position et de son orientation dans l'espace.

Avantageusement, l'étape de détermination d'un équipement à commander peut être suivie d'une étape de confirmation et/ou d'une étape d'infirmation de l'équipement à commander ainsi déterminé.

De préférence, l'étape de confirmation et/ou l'étape d'infirmation peut être mise en oeuvre par une interaction prédéfinie de l'utilisateur avec l'objet de commande. Lorsque l'utilisateur pointe un équipement à commander et active une commande, mais que la commande est envoyée à un autre objet, la télécommande permet à l'utilisateur d'indiquer que c'est le mauvais équipement à commander qui a été contrôlé via un bouton « correction » ou « help ». L'utilisateur appuie sur ce bouton et indique manuellement quel équipement à commander il a souhaité contrôler. Dans ce cas les différents procédés peuvent prendre en compte cette information afin de toujours contrôler l'équipement à commander souhaité par l'utilisateur lorsqu'il pointe dans cette direction.

Avantageusement et postérieurement à une étape d'infirmation de l'équipement à commander, une nouvelle étape de détermination d'un équipement à commander peut être automatiquement mise en oeuvre par le procédé de commande selon l'invention. Le procédé peut comprendre en outre une étape d'annulation de la première émission émise par l'objet de commander.

Avantageusement, l'étape de confirmation et/ou l'étape d'infirmation peut mettre en oeuvre une captation d'une grandeur physique. L'interaction prédéfinie est de préférence un déplacement prédéfini de l'équipement à commander effectué par l'utilisateur. Par exemple, l'utilisateur peut faire un geste spécifique avec l'objet de commande qui indique aux différents procédés que la commande exécutée n'est pas celle souhaitée par l'utilisateur. Ce geste peut être capté par un accéléromètre intégré à la télécommande, et peut par exemple être de secouer la télécommande.

Avantageusement, le procédé de commande selon l'invention peut comprendre une étape de découverte automatique pour découvrir chacun des équipements à commander.

Avantageusement, le procédé de commande selon l'invention peut comprendre une adaptation d'une interface de commande de l'objet de commande en fonction de l'équipement à commander.

Avantageusement, le procédé de commande selon l'invention peut comprendre une interprétation par une surface tactile d'au moins un mouvement d'au moins un doigt d'un utilisateur sur ladite surface. De préférence, les données de commande sont générées à partir de cette interprétation.

Avantageusement, le procédé de commande selon l'invention peut comprendre un affichage par l'interface de commande d'une information en fonction de l'équipement déterminé. Lorsque l'équipement à commander est un thermostat ou radiateur, il est affiché la température actuelle et/ou la température de consigne. Lorsque l'équipement à commander est une lampe ou ampoule, il est affiché l'état ON ou OFF - éteint ou allumé - de l'ampoule. Lorsque l'équipement à commander est une ampoule de couleur, il est affiché la couleur actuelle. Lorsque l'équipement à commander est un volet, il est affiché l'état des volets : ouverts ou fermés. Lorsque l'équipement à commander est un portail, il est affiché l'état ouvert ou fermé ou une vidéo d'une personne qui a sonné au portail. Lorsque l'équipement à commander est un four, il est affiché un temps de cuisson restant et/ou la température du four.

Lorsque l'objet de commande comprend un afficheur et lorsqu'il comprend une étape de détection, l'étape d'apprentissage est réalisée par une passerelle réseau. Ainsi, un hub jouant le rôle de passerelle peut détecter automatiquement tous les objets contrôlables connectés au même réseau informatique que le hub.

Lorsque l'objet de commande comprend un écran, l'apprentissage peut être réalisé directement sur l'écran de l'objet de commande.

Lorsqu'il comprend un afficheur et lorsqu'il comprend une étape de détection, l'étape d'apprentissage est réalisée via une application située sur un dispositif relié à un réseau. Ce peut être une application implémentée sur un ordinateur ou une application implémentée sur un smartphone ou tablette. Dans ces deux derniers cas, l'unité de commande qui peut être l'ordinateur, la tablette ou le smartphone est connectée avec fil, par une liaison de type câble USB ou sans-fil, pas une liaison de type WiFi ou Bluetooth, afin de pouvoir interagir pendant la phase d'apprentissage.

L'invention a également pour objet de proposer une utilisation d'un procédé de commande caractérisé en ce qu'il met en oeuvre un procédé de commande selon l'invention.

On appelle topologie un sous-ensemble maximal de l'ensemble des unités de positionnement tel que quelque soit une unité de positionnement de ladite topologie, sa position peut être déterminée, directement ou indirectement, par toute autre unité de positionnement de ladite topologie.

On peut ainsi définir deux topologies comme étant indépendantes lorsqu'il existe une unité de positionnement de la première topologie dont la position ne peut pas être connue, directement ou indirectement, par l'une quelconque des unités de positionnement de la deuxième topologie.

Selon une particularité de l'utilisation du procédé de commande, l'ensemble des unités de positionnement ne comprend qu'une seule topologie.

Selon une autre particularité de l'utilisation du procédé de commande, l'ensemble des unités de positionnement comprend au moins deux topologies.

De préférence, l'utilisation selon l'invention peut comprendre une détection d'une action prédéfinie par l'utilisateur. De préférence, cette détection est automatiquement mise en oeuvre. Cette action peut être la prise en main de la télécommande par l'utilisateur. L'affichage de la télécommande s'adapte dynamiquement en temps réel dès que la télécommande est prise en main et son afficheur affiche les informations liées à tout ce qui est pointé.

De préférence, l'utilisation selon l'invention peut comprendre une étape de détection d'une grandeur physique telle que l'accélération de l'objet de commande. De préférence, cette détection est automatiquement mise en oeuvre. Un accéléromètre peut ainsi détecter les mouvements de la télécommande et allumer l'affichage et/ou à l'inverse lorsque la télécommande est posée et ne bouge plus, alors l'affichage s'éteint automatiquement.

Avantageusement, l'utilisation selon l'invention peut comprendre une gestion d'un afficheur du dispositif de commande à partir de cette détection. Cette gestion peut être réalisée de manière automatique. Ainsi, lorsque l'utilisateur saisit l'objet de commande, la gestion de l'afficheur peut alimenter l'afficheur. Lorsque l'utilisateur pose l'objet de commande, la gestion de l'afficheur peut éteindre l'afficheur.

Avantageusement, l'utilisation selon l'invention peut comprendre une pluralité de mise en oeuvre automatique du procédé de commande selon l'invention. Ainsi, l'objet de commande est apte à commander les équipements de façon continue en fonction de sa position et de son orientation. Dans le cas où l'objet de commande présente un afficheur, l'affichage affiché par l'afficheur est adapté automatiquement et/ou dynamiquement en fonction de l'équipement déterminé par l'objet de commande. Le déplacement de l'objet de commande entre deux pièces éloignées associé à une mise en oeuvre automatique du procédé de commande selon l'invention présente en outre l'avantage de permettre un contrôle de deux équipements distants avec le même objet de commande lorsque ce dernier est déplacé d'une des deux pièces à l'autre, sans que lesdits deux équipements n'appartiennent nécessairement à la même topologie.

Avantageusement, l'utilisation selon l'invention peut comprendre une étape de définition de données d'habitudes. L'utilisation selon l'invention peut comprendre une pluralité de mise en oeuvre du procédé de commande en fonction desdites données d'habitudes. Les données d'habitude peuvent être associées à un geste d'un utilisateur ou un appui sur l'objet de commande. Par exemple, lorsque l'utilisateur active une touche ou pointe en direction d'une zone de la pièce, toutes les commandes sont enchaînées. On peut ainsi imaginer qu'un utilisateur souhaite contrôler toutes ses lampes en une fois, mais en pointant une zone précise de la pièce. Ceci lui évite avantageusement de devoir pointer chaque lampe de la pièce pour les contrôler individuellement.

Avantageusement, l'utilisation selon l'invention peut comprendre une étape d'apprentissage d'habitudes de commandes exécutées par l'utilisateur pour définir les données d'habitudes. L'utilisateur peut créer des macros, à l'aide du procédé d'apprentissage d'habitude. Les macros sont des enchainements de commandes lancées après une action unique de l'utilisateur. Par exemple, le procédé d'apprentissage d'habitude peut demander à l'utilisateur de pointer et d'effectuer toutes les commandes qu'il souhaite associer à cette macro et associe cet enchainement de commande à une touche ou à une zone de la pièce.

Avantageusement, l'étape d'apprentissage d'habitudes de commandes exécutées par l'utilisateur peut comprendre une étape d'enrichissement contextuel par des données d'enrichissement. Cet enrichissement contextuel mettant de préférence en oeuvre des données de grandeurs physiques, l'heure, la date, la position de l'objet de commande, des réponses de l'utilisateur à des questions, ou la répétitivité de commandes effectuées par l'utilisateur. Les éléments contextuels peuvent être par exemple l'heure ou le jour de l'année ou encore la position de la télécommande. La prise en compte de ces éléments est utilisée pour améliorer la pertinence des macros ou commandes et ainsi prédire la volonté de l'utilisateur. Un exemple est l'ouverture de volet alors qu'un utilisateur pointe les volets et appuie sur une commande alors que c'est le matin. Un autre exemple est la détection par une étape du procédé d'utilisation d'un actionnement successif d'une pluralité d'équipement à commander à plusieurs reprises par l'utilisateur à l'intérieur d'une même plage horaire. Le procédé d'apprentissage d'habitude peut alors utiliser les résultats de cette étape de détection pour décider de l'actionnement de cette pluralité d'objets et ce uniquement lorsque l'élément contextuel de plage horaire est le même.

L'invention a également pour objet de proposer un dispositif de commande d'au moins un équipement à commander dans un espace par au moins un objet de commande transportable. Le dispositif est caractérisé en ce qu'il comprend :
- des moyens de détermination de la position et de l'orientation dudit au moins un dispositif de commande portable dans ledit espace relativement à au moins une unité de positionnement,
- des moyens de détermination de la position et de l'orientation de dudit au moins un dispositif de commande portable dans ledit espace relativement au moins une unité de positionnement,
- des moyens de détermination d'une direction d'un sens pointé par ledit au moins un objet de commande à partir de la position et de l'orientation de cet objet de commande ainsi déterminées,
- des moyens de détermination d'un équipement à commander à partir de la direction et du sens ainsi déterminé,
- des moyens d'émission configurés pour émettre une commande à destination de l'équipement à commander déterminé par les moyens de détermination.

De préférence, le dispositif de commande selon l'invention comprend en outre une surface tactile et des moyens d'interprétation pour interpréter au moins un mouvement d'au moins un doigt d'un utilisateur sur cette surface tactile, les moyens d'émission étant en outre configurés pour générer la commande à partir de données provenant des moyens d'interprétation.

Avantageusement, le dispositif selon l'invention peut en outre comprendre un afficheur configuré pour afficher des informations relatives à l'équipement à commander ainsi déterminé.

Avantageusement, le dispositif selon l'invention peut comprendre un capteur de son et des moyens d'analyses configurés pour déterminer un résultat en fonction du son capté par le capteur de son et afficher ce résultat sur l'afficheur. Par exemple, lorsque l'objet de commande pointe une source de musique, le dispositif lance automatiquement une recherche de type Shazam® de la musique en cours et affiche un résultat tel que le titre du morceau, le nom de l'album, ou encore l'interprète sur l'affichage.

L'invention a également pour objet de proposer un système comprenant :
- au moins un objet de commande transportable disposée dans un espace,
- au moins une unité de positionnement dans cet espace, l'au moins une unité de positionnement étant apte à déterminer la position de l'objet de commande et/ou sa position relative par rapport à d'autres unités de positionnement,
- un dispositif de commande d'au moins un équipement à commander selon l'invention.

Avantageusement, l'au moins une unité de positionnement peut être intégrée à un équipement à commander. L'équipement à commander peut être une ampoule connectée, une lampe, une douille de lampe, une prise murale, un interrupteur mural, un thermostat, un mécanisme ou interrupteur de volets roulants, etc.

Avantageusement, des moyens de communication compris dans l'objet de commande et/ou l'au moins une unité de positionnement et/ou le dispositif de commande sont configurés pour mettre en oeuvre une même technologie radio. Dans ce cas, la communication de la commande pour commander peut aussi utiliser la même technologie radio que celle utilisée pour la localisation, par exemple la technologie UWB.

Avantageusement, l'au moins un dispositif de commande peut être intégré à l'au moins un objet de commande.

Avantageusement, le dispositif de commande peut être intégré à au moins une unité de positionnement.

Avantageusement, le dispositif de commande peut être intégré à l'équipement à commander.

Avantageusement, le système selon l'invention peut comprendre en outre une passerelle réseau.

De préférence, une passerelle réseau peut être configurée pour détecter automatiquement chacun des au moins un équipement à commander.

De préférence, une passerelle réseau peut comprendre le dispositif de commande, le dispositif de commande étant relié via cette passerelle réseau par une liaison filaire ou sans-fil à l'objet de commande et/ou à l'au moins une unité de positionnement.

De préférence, une passerelle réseau peut être configurée pour commander séquentiellement au moins une partie des équipements à commander. Ainsi, la passerelle réseau peut actionner chaque équipement à commander individuellement afin que l'utilisateur puisse l'identifier visuellement. Ce peut par exemple être le clignotement d'une ampoule, la montée et/ou l'abaissement de volets, etc.

Avantageusement, l'objet de commande peut être muni de moyens de stockage d'énergie rechargeable et le système peut en outre comprendre une base apte à recharger les moyens de stockage d'énergie.

Avantageusement, l'objet de commande est un téléphone comprenant les moyens d'émission du dispositif de commande.

De manière alternative, l'objet de commande peut comprendre un téléphone muni d'un accessoire, l'objet de commande comprenant les moyens d'émission du dispositif de commande. C'est le cas lorsqu'un accessoire additionnel est rajouté au smartphone : cet accessoire peut comporter la technologie nécessaire à la localisation indoor. La connexion physique au smartphone est réalisée soit par une prise de type jack, USB, lightning, soit en sans-fil via une technologie de type Bluetooth, BLE, Wifi, etc. Cet accessoire est solidaire du Smartphone ainsi la position du Smartphone peut être déterminé.

### Description des figures

D'autres avantages et particularités de l'invention apparaîtront à la lecture de la description détaillée de mises en oeuvre et de modes de réalisation nullement limitatifs, au regard de dessins annexés sur lesquels :
- la figure 1 représente schématiquement un mode de réalisation général d'un procédé de détermination d'un équipement à commander selon l'invention ;
- la figure 2 représente schématiquement un premier mode de réalisation d'un procédé de détermination d'un équipement à commander selon l'invention ;
- la figure 3 représente schématiquement un deuxième mode de réalisation d'un procédé de détermination d'un équipement à commander selon l'invention ;
- la figure 4 représente schématiquement un système de commande selon l'invention de type « automatique » ;
- la figure 5 représente schématiquement un système de commande selon l'invention de type « manuel».

### Description de modes de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

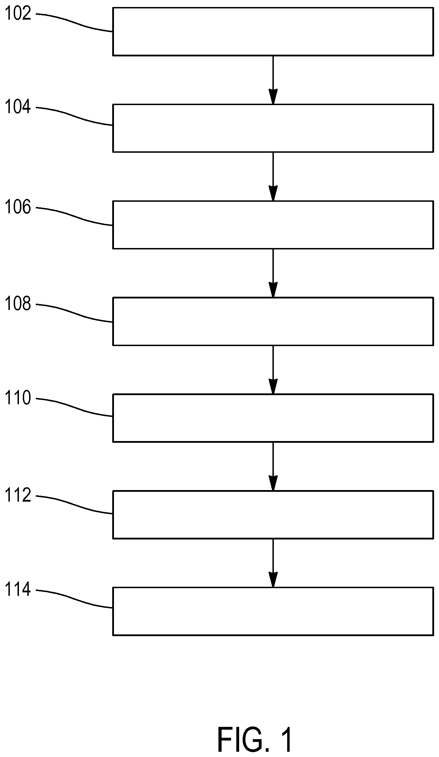

La figure 1 représente schématiquement un mode de réalisation général d'un procédé de détermination 100 d'un équipement à commander par un objet de commande disposé dans un espace comprenant des unités de positionnement aptes à déterminer leurs positions relatives les unes par rapport aux autres.

L'étape 102 est une étape de déploiement aléatoire de plusieurs noeuds dans un espace donné. Ces noeuds sont des équipements contrôlables, des équipements d'information ou des unités de positionnement.

L'étape 104 est une étape de mise en oeuvre de techniques de localisation. Ces techniques sont la trilatération ou la triangulation à partir de données relatives à un signal reçu telles que l'angle d'arrivée (AOA pour l'anglais Angle Of Arrivai), le temps d'arrivée (TOA, pour l'anglais Time Of Arrivai), la différence de temps d'arrivée (TDOA, pour l'anglais Time Différence Of Arrivai), la puissance reçue (RSSI, pour Received Signal Strenght Indication), la qualité du signal reçu (LQ, pour l'anglais « Link Quality »), ou encore la technique de la mesure du champ électromagnétique. Ces techniques peuvent être utilisées seules ou en combinaison avec des données provenant d'un accéléromètre, d'un magnétomètre ou d'une unité de détection de pression.

L'étape 106 est étape de mise en oeuvre de techniques de détermination d'orientation par rapport aux noeuds. Le procédé met en oeuvre une ou plusieurs techniques à partir de données relatives à un signal reçu telles que EMF, EMF, AOA, une transmission avec antenne directive ou la mise en oeuvre d'un ou plusieurs capteurs tel accéléromètre, un magnétomètre ou un gyroscope.

A l'étape 108 qui est une étape optionnelle, il est déterminé une enveloppe virtuelle par l'utilisateur pour un équipement à commander et l'utilisateur détermine sa localisation par rapport aux noeuds.

A l'étape 110, le procédé détermine une zone virtuelle pointée par l'objet de commande.

A l'étape 112, le procédé met en oeuvre une adaptation automatique de l'interface de contrôle de l'objet de commande (son affichage, son affichage tactile et/ou ses boutons) à l'équipement à commander sélectionné dans l'étape préalable : des informations associées à l'équipement à commander sont affichées sur l'objet de commande, des boutons de l'objet de commande sont disponibles pour l'utilisateur qui peut aussi, alternativement ou en combinaison, effectuer des actions.

A l'étape 114, une commande associée à l'action effectuée par l'utilisateur et envoyée à l'équipement à commander associé à la zone virtuelle pointée par l'objet de commande.

Il est maintenant décrit la détermination de la position des unités de localisation dans l'espace. Cette détermination est relative ou absolue : la position est dite relative lorsque les unités de positionnement sont positionnées les unes par rapport aux autres ; la position est dite absolue lorsque les unités de positon les unités de positionnement sont positionnées par rapport à un référentiel connu, par exemple à l'aide de la connaissance d'une position GPS. Plusieurs techniques de localisation sont possibles :
- une première technique met en oeuvre un calcul des distances en utilisant un des procédés suivants ou une combinaison des deux:
   ∘ un premier procédé met en oeuvre un calcul du temps de trajet d'un signal radio entre l'objet de commande et une unité de positionnement et entre les unités de positionnement,
   ∘ un deuxième procédé met en oeuvre un calcul de la puissance du signal radio en réception. La réception est réalisée soit du côté de l'objet de commande, soit du côté unité de positionnement,
- une deuxième technique met en oeuvre un calcul des angles de réception AOA et triangulation,
- une troisième technique met en oeuvre une utilisation de champs électromagnétiques pour déterminer position et orientation dans l'espace,
- bien entendu, il est possible de combiner plusieurs techniques et d'utiliser une pluralité de capteurs afin d'améliorer la précision de la localisation. Il est aussi possible de rajouter des capteurs afin de faciliter la localisation des différentes unités de positionnement dans l'espace.

Il est par exemple possible de rajouter un capteur de pression dans chaque unité de positionnement. Ceci a pour avantage d'obtenir l'altitude de chaque unité de positionnement et de déterminer ainsi l'orientation de l'espace des unités de positionnement par rapport au référentiel terrestre.

Dans un premier cas, certaines unités de positionnement ont des positions connues (« with anchors ») par rapport à un référentiel (terrestre avec GPS ou autre). Plusieurs techniques de localisation sont alors possibles. Ceci permet d'obtenir une localisation absolue des unités de positionnement par rapport au référentiel.

Dans un deuxième cas, aucune unité de positionnement n'a de position connue (« anchor free ») par rapport à un référentiel (terrestre avec GPS ou autre). Plusieurs techniques de localisation sont alors possibles. Ceci permet d'obtenir une localisation relative des unités de positionnement entre elles.

Il est maintenant décrit la détermination de la position de l'objet de commande. Les unités de positionnement permettent de calculer les coordonnées de position de l'objet de commande dans l'espace. Les distances entre l'objet de commande et les unités de positionnement sont calculées et sont utilisées pour déterminer la localisation de l'objet de commande dans l'espace. Il est possible d'utiliser les mêmes techniques de positionnement que celles utilisées pour la détermination des positions des unités de positionnement. L'objet de commande portatif étant mobile, sa localisation est déterminée en temps réel, et tous ses mouvements sont calculés (tracking).

Il est maintenant décrit la détermination de l'orientation de l'objet de commande par rapport aux unités de positionnement.

Dans une première branche, l'orientation est déterminée par rapport au référentiel terrestre. Des capteurs, tels que des accéléromètres et magnétomètres, permettent de déterminer l'angle et l'orientation de l'objet de commande par rapport au référentiel terrestre.

Dans une seconde branche, l'orientation est déterminée par rapport à un référentiel connu : on peut par exemple utiliser des champs électromagnétiques pour déterminer position et orientation dans l'espace.

Lorsque le positionnement des unités de localisation n'est pas fait par rapport au même référentiel que l'orientation de l'objet de commande, il convient de lier les deux. Dans ce cas, il peut être demandé à l'utilisateur de pointer certaines unités de positionnement et d'appuyer sur un bouton de l'objet de commande pour capturer l'orientation de chaque unité de positionnement. Il est ainsi possible de lier l'orientation de l'objet de commande avec l'espace des unités de positionnement. Chaque équipement apte à être commandé peut s'activer afin que l'utilisateur sache quel équipement à commander ce dernier doit pointer. L'activation est rendue visible par le clignotement d'une ampoule, l'abaissement ou le montage des volets, etc.

En utilisant l'orientation et la localisation de l'objet dans l'espace de commande, il est possible de déterminer la direction pointée par l'objet de commande et ainsi d'identifier l'équipement à commander.

Il est maintenant décrit l'amélioration de la précision de la position de l'objet de commande.

Dans une première branche, la précision est améliorée par l'utilisation de l'angle de réception du signal de l'objet de commande par les unités de positionnement. Avantageusement, à nombre d'unités de positionnement équivalent, ceci permet d'obtenir une précision plus importante de la localisation de la l'objet de commande. De plus, ceci permet de triangulariser la position de la l'objet de commande en utilisant moins d'unités de positionnement : une au lieu de deux, deux au lieu de trois, etc.

Dans une deuxième branche, la précision est améliorée par ajout de capteurs additionnels dans l'objet de commande pour améliorer la précision du calcul d'angle: gyroscope, capteur de champ magnétique terrestre, etc.

Dans une troisième branche, la précision est améliorée par ajout de capteurs additionnels dans l'objet de commande permettant de donner des informations de mouvement et de déplacement améliorant le calcul de la géolocalisation de l'objet de commande dans l'espace : accéléromètre, gyroscope, capteur de champ magnétique terrestre, etc.

Dans une quatrième branche, la précision est améliorée par ajout d'un capteur de pression ou altitude pour déterminer par exemple l'altitude et/ou l'étage où se situe l'objet de commande dans un bâtiment à plusieurs étages.

Il est maintenant décrit la possibilité d'amélioration de la précision de l'identification de l'équipement à commander pointé par l'objet de commande.

Ceci est rendu possible par ajout d'un capteur de distance sur l'objet de commande : la distance entre l'objet de commande et l'équipement à commander pointé est calculé par le capteur de distance. Cette information permet de mieux déterminer l'équipement à commander pointé ou la zone pointée par l'objet de commande et d'éviter de commander un équipement à commander qui est dans le prolongement de la direction pointée dans la même pièce, voir dans une autre pièce.

Il est maintenant décrit la possibilité d'amélioration de la précision du système en utilisant une méthode contextuelle. Ceci est rendu possible en demandant à l'utilisateur de renseigner via une application mobile ou un logiciel de configuration sur ordinateur une indication contextuelle relative à un objet à commander. Par exemple, une indication contextuelle relative à une ampoule peut être de qualifier l'ampoule de plafonnier ou de lampadaire, ou/et d'indiquer l'étage auquel elle est située. Cette information peut être utilisée pour déterminer la hauteur relative des unités de positionnement les unes par rapport aux autres.

Il est maintenant décrit un ensemble d'équipement à commander pouvant être commandés : lampe ou prises ; volets roulants ; dispositif de musique ; thermostat ; portail ou serrure ; jouet tel qu'une voiture électrique ; machine a café, cheminée au gaz ; matériel audiovisuel tel que télévision, lecteur DVD ou BluRay, caméra ; matériel informatique ; équipements de sociétés tierces tels que Volets Somfy®, Philips Hue®, Nest thermostat® ; alarme anti-intrusion, détecteur de fumée, détecteur de CO ; réveil et horloge ; équipement de cuisine tel que four, hotte, frigo, lave-vaisselle.

La découverte des équipements à commander peut être réalisée soit par une passerelle qui détecte automatiquement tous les équipements à commander connectés au même réseau ; soit par un utilisateur qui rentre manuellement les équipements à commander qui doivent être contrôlés par le système.

La découverte des équipements à commander peut se faire directement sur l'écran de l'objet de commande si l'objet de commande comporte un écran. La découverte peut aussi se faire sur un ordinateur ou via une application sur Smartphone ou tablette. Dans ce cas, la télécommande et l'ordinateur, la tablette ou le Smartphone sont connectés avec (câble USB) ou sans fil (Wifi ou Bluetooth) afin de pouvoir interagir pendant la phase de découverte.

Dans un premier mode de découverte, dit plug & play, les équipements à commander comportent une puce de géolocalisation. Ainsi, leur localisation relative à l'objet de commande est connue : aucun apprentissage n'est nécessaire. Dès la première utilisation, le système détermine automatiquement l'équipement à commander qui doit être contrôlé dès que l'utilisateur le pointe. Il est aussi possible pour l'utilisateur de modifier : contrôler telle fonction ou équipement à commander, mais en pointant ailleurs. Le système génère une cartographie automatiquement de tous les équipements à commander. Il n'est pas besoin de rentrer une carte ou faire un « training ». Le système recalcule automatiquement les coordonnés des équipements à commander à chaque fois que l'utilisateur appuie sur une commande : aucune carte n'a besoin d'être stockée. Ainsi, si l'utilisateur change une ampoule de place, sa nouvelle localisation est automatiquement prise en compte lors de l'appui sur une commande de l'objet de commande. Alternativement, il est aussi possible de stocker une cartographie des équipements à commander en permanence, par exemple lorsqu'il y a beaucoup d'équipements à commander et que le système doit être très réactif lorsque l'utilisateur appuie sur une commande.

Dans un deuxième mode de découverte, dit automatique, les équipements à commander ne comportent pas de puce de géolocalisation. L'utilisateur entre dans le mode d'apprentissage automatique. La passerelle actionne chaque individuellement équipement à commander afin que l'utilisateur puisse l'identifier visuellement. Il est alors demandé à l'utilisateur de pointer l'équipement à commander qui est activé et d'appuyer sur un bouton de l'objet de commande ou sur l'écran tactile. Lorsque l'objet de commande n'a pas de capteur de distance, il peut être demandé à l'utilisateur de pointer plusieurs fois le même équipement à commander depuis plusieurs positions différentes afin que le système puisse géolocaliser la cible dans l'espace. La passerelle fait ainsi automatiquement le lien entre l'équipement à commander qu'il a actionné et ses coordonnées grâce à l'action de pointage de l'utilisateur. La passerelle actionne alors l'équipement à commander suivant. Le même procédé est mis en oeuvre jusqu'à ce que tous les objets identifiés dans la maison aient été localisés par le système. Le système génère une cartographie automatiquement lorsque l'utilisateur pointe les équipements à commander. Un pointage unique est suffisant lorsque l'objet de commande a un capteur de distance.

Dans un troisième mode de découverte, dit manuel, il y a une association d'enveloppe virtuelle à des objets physique. Dans ce cas, l'enveloppe virtuelle ne comprend pas l'équipement à commander physique. Ce peut être le cas lorsqu'un utilisateur souhaite pointer la cheminée pour contrôler le thermostat ou encore pointer la fenêtre pour connaître la météo extérieure et que le résultat soit affiché sur l'objet de commande. Ce mode est également mis en oeuvre lorsque l'utilisateur souhaite contrôler une nouvelle fonction qui n'a pas été automatiquement détectée par le système, ou lorsque l'utilisateur souhaite modifier les réglages pour un équipement à commander. L'utilisateur peut alors contrôler un équipement à commander connecté ou une fonction en pointant une autre zone ou un autre équipement à commander. Dans ce cas, l'utilisateur entre dans le mode d'apprentissage manuel et pointe sur la zone souhaitée et indique au système l'équipement à commander qu'il souhaite commander à chaque fois qu'il pointe cette zone. Par exemple, l'utilisateur peut souhaiter contrôler la température dans la pièce en pointant sur la cheminée ou un radiateur au lieu de pointer sur le thermostat qui se situe dans une autre pièce. Le système génère une cartographie automatiquement. Un pointage unique est suffisant lorsque l'objet de commande a un capteur de distance.

Dans un quatrième mode d'apprentissage, dit de macro, l'utilisateur peut créer des macros. Une macro est un enchainement de commandes exécutées après une action unique de l'utilisateur. L'utilisateur entre dans le mode d'apprentissage de macro : il pointe et effectue toutes les commandes qu'il souhaite associer à cette macro et associe cet enchainement de commande à une touche ou à une zone de la pièce. Ainsi, toutes les commandes sont exécutées par la passerelle lorsque l'utilisateur active la macro. La macro est activée soit en appuyant sur une touche de macro, soit en pointant la zone associée à cette macro. Par exemple, l'utilisateur peut souhaiter contrôler toutes ses lampes à la fois en pointant une zone précise de la pièce pour lui éviter de devoir pointer chaque lampe de la pièce pour les contrôler individuellement.

Il est maintenant décrit des procédés de calibration et de gestion d'erreur.

Selon une première branche, il est proposé un algorithme d'apprentissage. Un algorithme d'apprentissage permet d'améliorer la fiabilité du système à chaque fois qu'un équipement à commander pointé est commandé. Le système enregistre alors les coordonnées de l'équipement à commander et ajoute ses nouvelles coordonnées à une base de données. Une fenêtre a par exemple une surface assez importante et un utilisateur peut pointer la fenêtre sans que cela soit toujours au même endroit. Il est alors possible de demander à l'utilisateur de pointer une ou plusieurs fois l'équipement à commander en des points différents de l'équipement afin de calibrer le système grâce à l'algorithme d'apprentissage. Par exemple, pour commander des volets, il est possible de demander à l'utilisateur de pointer plusieurs coins de la fenêtre en haut à gauche, en bas à droite. Le système apprend ainsi à délimiter la zone de l'équipement à commander dans l'espace. Lorsque l'utilisateur pointe n'importe quel point de la fenêtre, le système reconnaît que la zone pointée correspond au contrôle des volets.

Selon une deuxième branche, il est proposé un algorithme de tolérance. Une certaine marge de tolérance est insérée dans le système afin que le système identifie l'équipement à commander que l'utilisateur souhaite commander même si l'utilisateur ne pointe pas parfaitement l'équipement à commander. Ainsi si le résultat de la localisation de l'équipement à commander pointé ne correspond pas exactement aux coordonnées enregistrées dans la base de données, mais en est proche, le système valide tout de même la commande pour cet équipement à commander.

Selon une troisième branche, il est proposé un algorithme de probabilité. Cet algorithme permet de déterminer l'équipement à commander le plus probable entre plusieurs possibilités. Lorsque l'utilisateur pointe dans une direction pour commander un équipement à commander et que la direction pointée ne correspond à aucune coordonnée ou à plusieurs coordonnées de la base de données, l'algorithme identifie l'équipement à commander le plus probable en fonction de différentes données par exemple comme étant celui le plus proche de l'utilisateur et de l'objet de commande.

Selon une quatrième branche, il est proposé un algorithme de gestion d'erreur. Lorsque l'utilisateur pointe un équipement à commander et active une commande, mais que la commande est envoyée à un autre équipement à commander, l'objet de commande comprend un bouton « correction » ou « help » qui permet à l'utilisateur d'indiquer que c'est le mauvais équipement à commander qui a été commandé. L'utilisateur appuie sur ce bouton et indique manuellement l'équipement à commander qu'il souhaite contrôler. Dans ce cas les différents algorithmes prennent en compte cette information afin de toujours contrôler l'équipement à commander souhaité par l'utilisateur lorsqu'il pointe dans cette direction. En lieu et place du bouton « correction » ou « help », l'utilisateur peut faire un geste spécifique avec l'objet de commande qui indique au système que la commande exécutée n'est pas celle souhaitée par l'utilisateur. Ce geste est capté par un accéléromètre intégré à l'objet de commande. Ce geste peut être par exemple de secouer l'objet de commande. Dans ce cas, le système annule la commande et applique la commande au deuxième équipement à commander le plus probable.

Selon une cinquième branche, il est proposé un algorithme d'apprentissage de macro ou habitude. Cet algorithme permet de détecter des schémas récurrents de commande de l'utilisateur. Une fois détecté un schéma récurrent, la passerelle peut décider d'enchainer automatiquement les commandes sous forme de macro sans que l'utilisateur n'ait à le faire. Par exemple, un schéma récurrent peut être l'allumage consécutif de deux lampes et la fermeture d'un volet du salon au même moment. Après plusieurs récurrences, l'algorithme apprend que l'utilisateur souhaite toujours allumer ces deux lampes et fermer le volet en même temps. La passerelle peut alors décider de toujours allumer la deuxième lampe et de fermer le volet dès que l'utilisateur allume la première lampe.

Selon une sous branche de cette cinquième branche, il peut être pris en compte certains éléments contextuels tels que l'heure, le jour ou encore la position de l'objet de commande pour améliorer la pertinence des macros ou commandes et ainsi prédire la volonté de l'utilisateur. Par exemple, lorsque l'utilisateur pointe les volets et appuie sur une commande et que c'est le matin, l'algorithme détermine que l'utilisateur souhaite ouvrir les volets. Si à plusieurs reprises, l'utilisateur actionne trois équipements à commander successivement toujours dans la même plage horaire, alors l'algorithme peut décider de créer une macro automatique qui actionne les trois équipements à commander à la fois, mais uniquement dans cette même plage horaire.

Il est maintenant décrit un découpage système.

Le système comprend optionnellement une passerelle. La passerelle est un élément qui centralise la position relative des unités de positionnement et de l'objet de commande, et reçoit les commandes de l'utilisateur et comprend un dispositif pour déterminer ce qui doit être commandé en fonction de la position relative de tous les éléments et des paramètres de pointage. Ce dispositif de détermination peut se situer soit directement dans l'objet de commande soit dans une des unités de positionnement, soit dans une passerelle séparée.

Les unités de positionnement peuvent être branchées sur secteur ou sur batterie. Dans ce cas, elles n'ont que ce rôle et aucune d'autre fonction. Alternativement, les unités de positionnement peuvent être intégrées à des équipements contrôlables. Dans ce cas, la communication de la commande pour commander peut utiliser la même technologie que celle utilisée pour la localisation (UWB ou autre). L'apprentissage n'est pas indispensable dans ce cas, car le système connaît la position relative des équipements à commander contrôlables par rapport à l'objet de commande.

L'objet de contrôle peut être soit une télécommande, soit un tag, soit un Smartphone.

Une télécommande peut comprendre :
- une électronique de géolocalisation indoor ;
- un capteur d'angle tel qu'un gyroscope, un capteur de mouvement tel qu'un accéléromètre. L'accéléromètre permet également de mettre la télécommande en mode veille quand aucun mouvement n'est détecté afin d'économiser de la batterie ;
- un capteur de champs magnétiques ;
- un capteur de pression pour déterminer la hauteur dans une maison ou immeuble à plusieurs étages, un capteur de distance pour calculer la distance entre la télécommande et l'équipement à commander pointé ;
- un affichage configuré pour afficher automatiquement des données en fonction de l'équipement à commander ou de la zone pointée. Les données peuvent être :
   ∘ la température actuelle ou de consigne pour un thermostat ou un radiateur ;
   ∘ l'état d'une lampe ou d'une ampoule, éteinte ou allumée ;
   ∘ la couleur actuelle d'une lampe RGB ;
   ∘ l'état de volets, ouverts ou fermés ;
   ∘ le volume, le titre de chansons, de playlist, ou encore le nom de la radio dans le cas d'une source musicale ;
   ∘ l'état ouvert ou fermé ou encore une vidéo de la personne qui a sonné au portail dans le cas d'un portail, l'afficheur peut afficher ;
   ∘ le temps de cuisson restant ou bien la température actuelle du four lorsqu'un utilisateur pointe un four.

Lorsqu'une source de musique est pointée, une recherche de type Shazam de la musique en cours est automatiquement générée et le résultat est affiché sur l'affichage. Le résultat peut être le titre du morceau, le nom de l'album ou encore l'interprète. Dans ce cas, la télécommande intègre un capteur de son.

La télécommande peut être sans affichage.

La télécommande est configurée pour que son affichage s'adapte dynamiquement en temps réel dès que la télécommande est prise en main. Elle affiche les informations liées à tout ce qui est pointé. Un accéléromètre permet de détecter les mouvements de la télécommande et d'allumer son affichage, et à l'inverse d'éteindre sont affichage lorsque la télécommande est posée et ne bouge plus.

La télécommande peut être alimentée par des piles que l'utilisateur change ou par des piles rechargeables. Dans ce dernier cas, l'utilisateur met la télécommande sur une base pour recharger les piles de la télécommande.

L'objet de commande peut être un tag. Dans le cas du tag, seuls les capteurs servant à la localisation sont présents. L'utilisateur garde le tag sur lui quand il se déplace dans une maison par exemple afin que lumière et musique le suivent. Dans ce cas de figure, l'utilisateur ne pointe aucun équipement à commander, c'est une commande passive.

L'objet de commande peut être un smartphone :
- soit le smartphone intègre une technologie de géolocalisation indoor et les autres capteurs nécessaires pour le calcul d'angle et de distance ;
- soit un accessoire additionnel est ajouté au smartphone : cet accessoire comporte la technologie nécessaire à la géolocalisation indoor, et se connecte soit physiquement au Smartphone (prise jack, usb, lightning, etc.), soit en sans-fil via Bluetooth, BLE, Wifi, etc. Cet accessoire est solidaire du smartphone de sorte que la position du smartphone peut être déterminée.

Il est maintenant décrit des commandes.

Les commandes peuvent être réalisées avec un écran tactile selon les matrices de commandes ci-après décrites.

Alternativement ou en combinaison avec l'écran tactile, les commandes peuvent être implémentées sous la forme de boutons tels que
- des boutons + et -,
- des boutons ON/OFF,
- des boutons Change colors,
- des bouton 1, 2, 3, A, B, C etc. Ces boutons peuvent permettre d'activer :
   ∘ des macros ;
   ∘ ou des ambiance préenregistrées. Une ambiance peut être des lumières ton chaud et tamisées, des lumières ton froid et fortes, une fermeture des volets et un abaissement de l'intensité des lumières pour regarder un film, l'extinction de toutes les lumières et l'abaissement de tous les volets, etc.

Les commandes sont soient actives, soient passives.

Dans le cas de commande active, l'utilisateur pointe un équipement à commander pour commander des équipements à commander directement visibles ou commander des équipements à commander non directement visible. Un exemple de commande d'équipement à commander non visible est celui d'une lampe du salon depuis la cuisine ou encore la commande de tous les volets roulants de la maison.

Dans le cas de commande passive, l'utilisateur se déplace avec la télécommande ou un tag dans la poche. Les équipements à commander sont activés automatiquement en fonction de la localisation de la télécommande ou du tag. Les lumières et la musique s'allument automatiquement en fonction de la position de la télécommande ou du tag et suivent ainsi l'utilisateur de pièce en pièce en fonction de sa localisation. Par exemple, les lumières et la musique des pièces où l'utilisateur ne se trouve pas s'éteignent, et inversement s'allument dans la pièce ou il se trouve. Dans un autre exemple, le portail du garage s'ouvre lorsque l'utilisateur s'approche du portail avec le tag sur son porte-clés. Dans encore un autre exemple, les volets se ferment, les lumières s'éteignent et le portail se referme lorsque l'utilisateur s'éloigne de la maison.

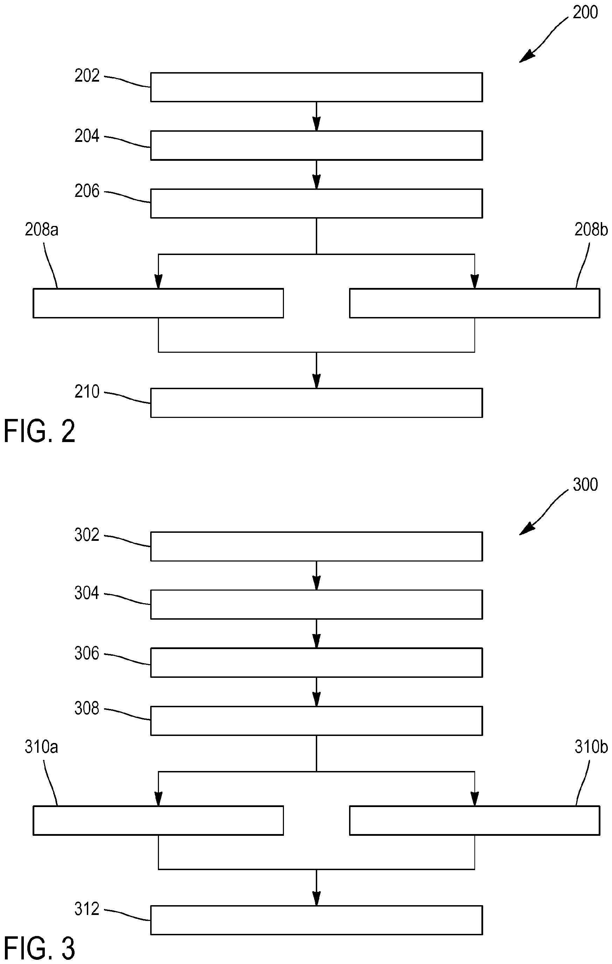

La figure 2 représente schématiquement un premier mode de réalisation d'un procédé de détermination 200 d'un équipement à commander par un objet de commande disposé dans un espace comprenant des unités de positionnement aptes à déterminer leurs positions relatives les unes par rapport aux autres.

L'étape 202 est une étape de déploiement aléatoire d'unités de positionnement. Certaines de ces unités de positionnement sont aptes à connaître leurs positions absolues par rapport à la terre et sont alors appelées unités d'ancrage.

L'étape 204 est une étape de mise en oeuvre de techniques de localisation. Ces techniques sont la trilatération ou la triangulation à partir de données relatives à un signal reçu telles que l'angle d'arrivée (AOA pour l'anglais Angle Of Arrivai), le temps d'arrivée (TOA, pour l'anglais Time Of Arrivai), la différence de temps d'arrivée (TDOA, pour l'anglais Time Différence Of Arrivai), la puissance reçue (RSSI, pour Received Signal Strenght Indication), la qualité du signal reçu (LQ, pour l'anglais « Link Quality »), ou encore la technique de la mesure du champ électromagnétique (EMF, pour l'anglais « electromagnetic field »).

A l'étape de résultat intermédiaire 206, les positions de toutes les unités de localisation sont connues par rapport aux unités d'ancrage. Les positions absolues de toutes les unités de localisation sont donc connues par rapport à la terre.

Postérieurement à l'étape 206, le procédé met en oeuvre sélectivement l'une ou l'autre des deux étapes :
- à l'étape 208a, le procédé met en oeuvre des capteurs d'orientation par rapport à l'espace formé par les unités de positionnement. Ces capteurs peuvent mettre en oeuvre des techniques telles que EMF, AOA, transmission directive ;
- à l'étape 208b, le procédé met en oeuvre des capteurs d'orientation absolue par rapport à la terre. Ces capteurs sont par exemple des accéléromètres ou encore des magnétomètres.

Postérieurement aux étapes 208a et 208b, le procédé met en oeuvre l'étape de résultat intermédiaire 210.

A l'étape 210, l'orientation de l'objet de commande par rapport à la terre est connue. L'orientation de l'objet de commande par rapport aux noeuds s'en déduit donc facilement.

Ainsi, le procédé selon la figure 2 met en oeuvre une étape de détermination de la position et de l'orientation de l'objet de commande dans l'espace à partir des positions des unités de positionnement.

Une étape de détermination d'un sens pointé par l'objet de commande à partir de la position et de l'orientation de l'objet de commande ainsi déterminées est ensuite mise en ouvre. Il suffit par exemple de connaître la position de deux points de l'objet de commande relativement à la position de l'objet de commande pour déterminer le sens pointé par l'objet de commande.

Le procédé met ensuite en oeuvre une étape de détermination d'un équipement à commander à partir du sens ainsi déterminé. Différentes possibilités de détermination de l'équipement à commander à partir du sens ainsi déterminé seront décrites par la suite.

La figure 3 représente schématiquement un deuxième mode de réalisation d'un procédé de détermination 300 d'un équipement à commander par un objet de commande disposé dans un espace comprenant des unités de positionnement aptes à déterminer leurs positions relatives les unes par rapport aux autres.

L'étape 302 est une étape de déploiement aléatoire d'unités de positionnement. Aucune de ces unités de positionnement ne connait sa position absolue par rapport à la terre.

L'étape 304 est une étape de mise en oeuvre de techniques de localisation sans ancrage choisie telle que la trilatération ou la triangulation à partir de données relatives à un signal reçu telles que l'angle d'arrivée (AOA pour l'anglais Angle Of Arrivai), le temps d'arrivée (TOA, pour l'anglais Time Of Arrivai), la différence de temps d'arrivée (TDAO, pour l'anglais Time Différence Of Arrivai), la puissance reçue (RSSI, pour Received Signal Strenght Indication), LQ, EMF, ...

A l'étape 306, les positions de toutes les unités de localisation sont déterminées les unes par rapport aux autres dans l'espace relatif des unités de localisation.

A l'étape 308, l'utilisateur pointe l'objet de commande en direction de chacune des unités de localisation, l'une après l'autre.

Postérieurement à l'étape 308, le procédé met en oeuvre sélectivement deux étapes :
- à l'étape 308a, le procédé met en oeuvre des capteurs d'orientation par rapport à l'espace formé par les unités de positionnement. Ces capteurs peuvent mettre en oeuvre des techniques telles que EMF, AOA, transmission directive ;
- à l'étape 308b, le procédé met en oeuvre des capteurs d'orientation absolue par rapport à la terre. Ces capteurs sont par exemple des accéléromètres ou encore des magnétomètres.

Postérieurement aux étapes 308a et 308b, le procédé met en oeuvre l'étape 310.

A l'étape 310, l'orientation de l'objet de commande par rapport à l'espace des unités de localisation est déduite.

Ainsi, le procédé selon la figure 3 met en oeuvre une étape de détermination de la position et de l'orientation de l'objet de commande dans l'espace à partir des positions des unités de positionnement.

Une étape de détermination d'un sens pointé par l'objet de commande à partir de la position et de l'orientation de l'objet de commande ainsi déterminées est ensuite mise en ouvre. Il suffit par exemple de connaître la position de deux points de l'objet de commande relativement à la position de l'objet de commande pour déterminer le sens pointé par l'objet de commande.

Le procédé met ensuite en oeuvre une étape de détermination d'un équipement à commander à partir du sens ainsi déterminé. Différentes possibilités de détermination de l'équipement à commander à partir du sens ainsi déterminé sont décrites par la suite.

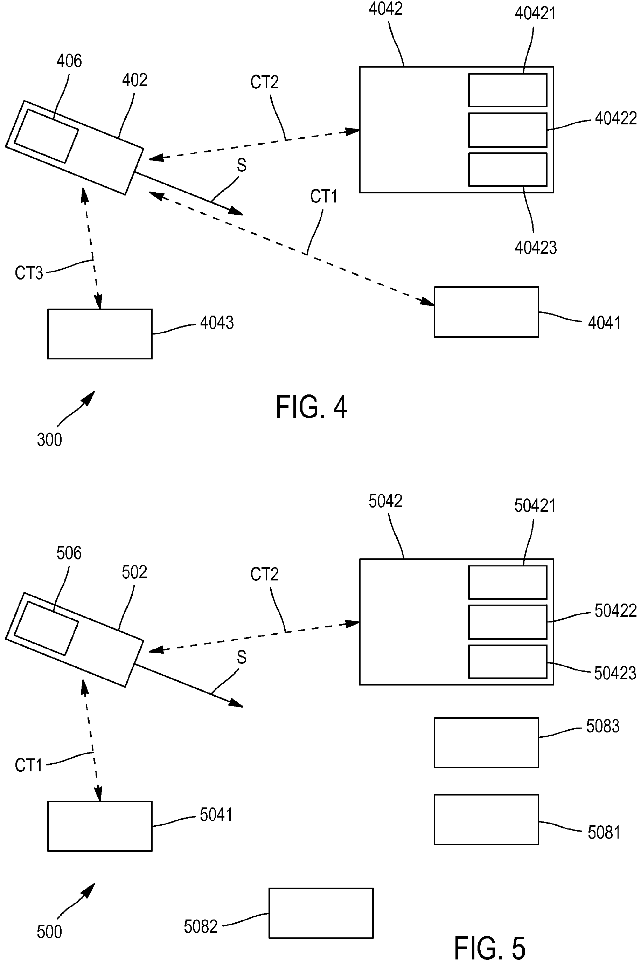

La figure 4 illustre un mode de réalisation d'un système de commande 400 selon l'invention.

Le système de commande 400 comprend :
- un objet de commande 402 disposée dans un espace,
- trois unités de positionnement 4041, 4042, 4043 dans cet espace.

Les trois unités de positionnement 4041, 4042, 4043 sont aptes à déterminer leurs positions relatives les unes par rapport aux autres. De plus, chacune des unités de positionnement est un équipement à commander.

L'unité de positionnement 4042 comprend :
- un processeur 40421,
- des moyens de communication 40422 reliés au processeur 40421, et
- des moyens de positionnement 40423 reliés au processeur 4021.

Chacune des unités de positionnement comprend des équipements similaires aux équipements de l'unité de positionnement 4042. Les moyens de communication respectifs des unités de positionnement sont configurés pour échanger entre eux des données d'information. Ces moyens de communication sont en outre chacun configurés pour échanger des données d'information avec l'objet de commande.

L'objet de commande 402 comprend un dispositif de commande 406 d'au moins un équipement à commander selon l'invention et un moyen de communication. L'objet de commande 402 comprend également un écran d'affichage tactile et/ou des boutons de l'objet de commande. Le dispositif 406 comprend des moyens agencés pour déterminer des positions relatives dans l'espace des trois unités de positionnement,
- des moyens de détermination de la position et de l'orientation de l'objet de commande 402 dans l'espace à partir des positions des unités de positionnement déterminées,
- des moyens de détermination d'un sens pointé S par l'objet de commande 402 à partir de la position et de l'orientation de cet objet de commande ainsi déterminées.

Ainsi, le dispositif de commande 406 est configuré pour mettre en oeuvre les procédés de détermination d'un équipement à commander et de commande d'un équipement selon l'invention.

Il a été décrit ci-dessus en référence aux deux premières figures deux modes de réalisation pour :
- déterminer la position et de l'orientation de l'objet de commande 402 dans l'espace à partir des positions des unités de positionnement, et
- déterminer un sens pointé S par l'objet de commande 402 à partir de la position et de l'orientation de l'objet de commande ainsi déterminées.

Différents échanges sont réalisés entre le dispositif de commande et les unités de positionnement, ce qui est illustré par les flèches CT1, CT2 et CT3 sur la figure 4.

Dans ce mode de réalisation de type « plug and play », les équipements à commander comprennent ainsi les unités de positionnement. Ainsi, aucun apprentissage de la position de l'équipement à commander n'est nécessaire. La localisation relative à l'objet de commande est connue. Dès la première utilisation, le système connaît automatiquement quel équipement doit être contrôlé dès que le sens pointé S par l'objet de commande le pointe.

Le système génère une cartographie automatiquement de tous les équipements contrôlables. Le système recalcule automatiquement les enveloppes virtuelles des équipements à commander à chaque fois que l'utilisateur met en ouvre une fonction de l'objet de commande et aucune carte n'a besoin d'être stockée. Par exemple, si l'utilisateur change une ampoule de place, sa nouvelle localisation est automatiquement prise en compte lors de l'appui sur la touche de l'objet de commande.

Alternativement, il est aussi possible de stocker une cartographie des équipements à commander en permanence. Ceci peut être avantageux lorsqu'un grand nombre d'équipements à commander sont présents et qu'une forte réactivité du système est attendue.

La figure 5 illustre un deuxième mode de réalisation d'un système de commande 500 selon l'invention.

Le système de commande 500 comprend :
- un l'objet de commande 502 disposée dans un espace,
- deux unités de positionnement 5041, 5042 dans cet espace ; et
- trois équipements à commander 5081, 5082, 5083.

Les deux unités de positionnement 5041 et 5042 sont aptes à déterminer leurs positions relatives l'une par rapport à l'autre. Aucune de ces unités de positionnement n'est un équipement à commander.

L'unité de positionnement 5042 comprend :
- un processeur 50421,
- des moyens de communication 50422 reliés au processeur 50421, et
- des moyens de positionnement 50423 reliés au processeur 5021.

Chacune des unités de positionnement comprend des équipements similaires aux équipements de l'unité de positionnement 5042. Les moyens de communication respectifs des unités de positionnement 5041 et 5042 sont configurés pour échanger entre eux des données d'information.

L'objet de commande 502 comprend un dispositif de commande 506 d'au moins un équipement à commander selon l'invention. Le dispositif 506 comprend des moyens agencés pour déterminer des positions relatives dans l'espace des trois unités de positionnement,
- des moyens de détermination de la position et de l'orientation de l'objet de commande 502 dans l'espace à partir des positions des unités de positionnement 5041 et 5042 déterminées,
- des moyens de détermination d'un sens pointé S par l'objet de commande 502 à partir de la position et de l'orientation de cet objet de commande ainsi déterminées.

Ainsi, le dispositif de commande 506 est configuré pour mettre en oeuvre les procédés de détermination d'un équipement à commander et de commande d'un équipement selon l'invention.

Il a été décrit ci-dessus en référence aux deux premières figures deux modes de réalisation pour :
- déterminer la position et de l'orientation de l'objet de commande 402 dans l'espace à partir des positions des unités de positionnement, et
- déterminer un sens pointé S par l'objet de commande 502 à partir de la position et de l'orientation de l'objet de commande ainsi déterminées.

Différents échanges sont réalisés entre le dispositif de commande et les unités de positionnement, ce qui est illustré par les flèches CT1, CT2 et CT3 sur la figure 5.

Dans ce mode de réalisation de type automatique, les équipements à commander 5081, 5082, 5083 ne comportent pas d'unité de géolocalisation. Il est demandé à un utilisateur du dispositif de commande 406 de mettre en oeuvre un mode d'apprentissage automatique. Dans ce mode d'apprentissage, le système selon l'invention actionne séquentiellement chacun des équipements à commander 4081, 4082, 4083 individuellement afin que l'utilisateur puisse identifier visuellement cet équipement.

Pour chaque équipement à commander actionné par le système, l'utilisateur doit pointer plusieurs fois à partir de différents couples de position/sens, à l'aide de l'objet de commande 502, l'enveloppe virtuelle de cet équipement à commander 5081, 5082, 5083 et exécuter une action particulière sur l'objet de commande, par exemple appuyer sur un bouton de l'objet de commande ou sur un écran tactile de ce dernier.

Lorsque l'objet de commande possède un capteur de distance, la connaissance d'un seul couple position/sens est nécessaire au système.

Le système apprend ainsi à faire un lien entre l'équipement à commander et une partie d'enveloppe virtuelle associée à l'équipement à commander ainsi définie par l'utilisation.

Le système actionne alors l'équipement à commander suivant et ainsi de suite jusqu'à ce que tous les équipements à commander identifiés dans la maison soient localisés par le système.

Le système génère une cartographie automatiquement lorsque l'utilisateur pointe des équipements à commander. La cartographie doit être conservée pour ne pas perdre l'apprentissage de la localisation des enveloppes virtuelles.

Ainsi, l'enveloppe virtuelle d'au moins un équipement à commander est définie à partir d'une pluralité de détermination de position et d'orientation de l'objet de commande dans l'espace à partir des positions des unités de positionnement, et d'une pluralité de déterminations de sens pointés par l'objet de commande à partir de pluralité de positions et d'orientations de l'objet de commande ainsi déterminées.

Comme cela est entendu à la lumière de la description de la figure 5, les unités de positionnement ne jouent alors que le rôle d'unités de positionnement.

En référence à la figure 4, les unités de positionnement sont intégrées aux équipements à commander. En ce cas, la commande de l'équipement à commander peut avantageusement mettre en oeuvre la même technologie pour communiquer que celle utilisée pour la localisation. On pourra avantageusement utiliser une technologie telle que UWB (pour l'anglais « Ultra Wide Band »).

Il est maintenant décrit plus en détail une étape de détermination d'un équipement à commander à partir du sens ainsi déterminé par un dispositif de commande selon l'invention.

L'équipement à commander est celui qui est associé à l'enveloppe virtuelle la plus proche de l'axe pointé par le sens S de l'objet de commande déterminé par le dispositif de commande.

Lorsque le sens pointé par l'objet de commande correspond à plusieurs possibilités d'enveloppe virtuelle d'équipement à commander, l'enveloppe virtuelle la plus probable est choisie : L'enveloppe virtuelle la plus probablement pointée est l'enveloppe virtuelle la plus proche dans l'espace de l'objet de commande (donc de l'utilisateur).

Par ailleurs, lorsque l'équipement à commander déterminé par le système à partir du sens de l'objet de commande est considéré comme incorrect par l'utilisateur, l'utilisateur peut indiquer que c'est un mauvais équipement à commander qui a été déterminé. Dans ce cas, des algorithmes de gestion de l'enveloppe virtuelle associée à cet équipement prennent en compte cette information afin de toujours contrôler cet équipement lorsque l'utilisateur pointe dans cette direction. Dans ce cas, le système peut automatiquement annuler la première commande que l'utilisateur estime comme erronée et applique la même commande à la deuxième enveloppe virtuelle la plus probable après la première.

Afin d'indiquer que la commande est erronée, l'utilisateur peut soit appuyer sur un bouton (physique ou zone tactile), soit faire un geste spécifique avec l'objet de commande qui sera capté par un capteur type accéléromètre et interprété par l'objet de commande.

L'équipement à commander peut aussi être associé à une ou plusieurs autres enveloppes virtuelles. Pour cela, le système met en oeuvre un mode d'apprentissage de routine. Ainsi, le système peut détecter qu'un utilisateur a pour habitude d'allumer deux lampes et de fermer un volet du salon dans un court laps de temps. Le système commande alors l'allumage de l'autre lampe et la fermeture du volet dès lors qu'il a déterminé à partir du sens pointé par l'objet de commande que l'équipement à commander est l'une des deux lampes.

Une enveloppe virtuelle est définie comme une zone de l'espace des unités de positionnement associée à un équipement à commander. Différentes possibilités de détermination d'une enveloppe virtuelle sont maintenant décrites.

L'enveloppe virtuelle est définie en partie par la mise en oeuvre d'un algorithme d'apprentissage. Un algorithme d'apprentissage permet d'améliorer la fiabilité du système à chaque fois qu'un équipement est commandé. Le système enregistre des informations relatives au sens déterminé de l'objet de commande et augmente l'enveloppe virtuelle de l'équipement à commander de ces informations. Une définition d'enveloppe virtuelle d'un équipement à commander est possible par interaction avec un utilisateur. Par exemple, pour commander des volets, il est possible de demander à l'utilisateur de pointer plusieurs coins de la fenêtre en haut à gauche, en bas à droite. Le système apprend ainsi à délimiter l'enveloppe virtuelle de la fenêtre dans l'espace. Lorsque l'utilisateur pointe n'importe où sur la fenêtre, c'est à dire à l'intérieur de l'enveloppe virtuelle relative aux volets, le système reconnaît que la zone pointée correspond à un contrôle des volets.

L'enveloppe virtuelle est également définie par la mise en oeuvre d'un algorithme de tolérance. L'algorithme de tolérance augmente le volume de l'enveloppe virtuelle précédemment définie.

Dans un mode de réalisation de l'objet de commande, celle-ci comprend des boutons et un écran d'affichage. L'interface de commande de l'objet de commande s'adapte en fonction de l'équipement à commander. L'objet de commande comprend :
- des boutons + et - pour augmenter ou réduire respectivement une intensité relative à l'équipement à commander, par exemple le volume sonore ou l'intensité lumineuse,
- des boutons ON, OFF pour allumer ou éteindre respectivement l'équipement à commander,
- des boutons de changement de couleur, par exemple pour changer la couleur d'une lampe,
- des boutons pour commander des macros, par exemple pour commander une pluralité d'équipements ou encore commander des ambiances préenregistrées telles que des lumières à ton chaud et tamisées, des lumières à ton froid et fortes, une fermeture de volets et un abaissement d'intensité de lumière pour regarder un film, une séquence d'extinction de toutes les lumières et la fermeture de tous les volets, etc.

Bien entendu, d'autres modes de réalisation de l'objet de commande sont imaginés tels que la mise en oeuvre d'une surface tactile. L'interface de commande de l'objet de commande et la commande elle-même s'adaptent en fonction de l'équipement à commander. La commande s'adapte également en fonction du nombre de doigts utilisé (1 doigt, 2 doigts, 3 doigts...) et du mouvement effectué avec ces doigts sur la surface tactile (de bas en haut, de gauche à droite, etc.). Ainsi, la commande communiquée pour commander le ou les équipements commandés s'adapte en fonction de la combinaison de la zone pointée par l'objet de commande et des mouvements des doigts faits sur la surface tactile.

Bien entendu, l'utilisateur peut configurer l'objet de commande comme il le souhaite pour commander toutes les fonctionnalités de l'équipement à commander.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

Le dispositif de commande peut par exemple être un accessoire surajouté à la l'objet de commande. L'objet de commande peut être réalisé sous forme de smartphone.

## Revendications

1. Procédé de détermination d'un équipement à commander par un objet de commande transportable disposé dans un espace comprenant au moins une unité de positionnement apte à déterminer la position relative dudit objet de commande par rapport à cette unité de positionnement, le procédé comprenant:
- une étape pour définir une enveloppe virtuelle d'au moins un équipement à commander, l'enveloppe virtuelle de l'au moins un équipement à commander ne comprenant aucun point de l'enveloppe physique de l'équipement à commander,
- une étape de détermination de la position et de l'orientation dudit objet de commande dans ledit espace à partir de ladite position de ladite au moins une unité de positionnement,
- une étape de détermination d'une direction et d'un sens pointé par ledit objet de commande à partir desdites position et orientation dudit objet de commande ainsi déterminées,
- une étape de détermination d'un équipement à commander dans l'espace à partir des direction et sens ainsi déterminés,
l'étape de détermination d'un équipement à commander utilisant l'enveloppe virtuelle définie pour l'au moins un équipement à commander.

2. Procédé selon la revendication 1, dans lequel l'espace comprend une pluralité d'unité de positionnement aptes à déterminer leurs positions relatives les unes par rapport aux autres.

3. Procédé selon la revendication 1 ou 2, dans lequel l'étape de détermination de la position et/ou l'étape de détermination de l'orientation de l'objet de commande dans ledit espace comprend une étape d'évaluation du temps de trajet d'un signal radio entre l'objet de commande et une unité de positionnement, ou entre plusieurs unités de positionnement.

4. Procédé selon l'une quelconque des revendications précédentes, dans lequel l'étape de détermination de la position et/ou l'étape de détermination de l'orientation de l'objet de commande dans ledit espace comprend une étape d'évaluation de la puissance de réception d'un signal radio par l'objet de commande ou par l'au moins une unité de positionnement.

5. Procédé selon l'une quelconque des revendications précédentes, dans lequel l'étape de détermination de la position et/ou l'étape de détermination de l'orientation de l'objet de commande dans ledit espace comprend une étape de détermination des angles de réception d'un signal radio par l'objet de commande ou par l'au moins une unité de positionnement.

6. Procédé selon l'une quelconque des revendications précédentes, dans lequel l'étape de détermination de la position et/ou l'étape de détermination de l'orientation de l'objet de commande dans ledit espace met en oeuvre une étape de triangulation, latération, trilatération ou multilatération.

7. Procédé selon l'une quelconque des revendications précédentes, comprenant une étape mettant en oeuvre une captation par l'objet de commande de grandeurs physiques dans l'espace.

8. Procédé selon l'une quelconque des revendications précédentes, comprenant une étape mettant en oeuvre une captation par l'objet de commande de la distance entre cette dernière et un obstacle se situant dans le sens pointé par l'objet de commande.

9. Procédé selon l'une quelconque des revendications précédentes, comprenant une étape pour associer un référentiel lié à l'objet de commande à un référentiel lié à l'au moins une unité de positionnement.

10. Procédé selon la revendication précédente, dans lequel l'étape d'association du référentiel lié à l'objet de commande au référentiel lié à l'au moins une unité de positionnement comprend pour chacune des unités de positionnement une étape comprenant un pointage par l'utilisateur de cet objet de commande d'une unité de positionnement et un appui de l'utilisateur sur l'objet de commande.

11. Procédé selon l'une quelconque des revendications précédentes, **caractérisé en ce que** l'enveloppe virtuelle de l'au moins un équipement à commander est définie à partir d'une pluralité de déterminations de position et d'orientation de l'objet de commande dans l'espace.

12. Procédé selon la revendication précédente, dans lequel l'étape de détermination de l'enveloppe virtuelle comprend une étape d'activation d'au moins un des équipements à commander afin de le rendre identifiable visuellement par l'utilisateur et une étape comprenant un pointage par l'utilisateur de l'objet de commande vers cet au moins un équipement et un appui de l'utilisateur sur l'objet de commande.

13. Procédé selon l'une quelconque des revendications précédentes, comprenant une étape de déplacement d'un équipement à commander et une action d'un utilisateur sur l'objet de commande, l'action de l'utilisateur sur l'objet de commande étant suivie d'une nouvelle mise en oeuvre d'un procédé selon l'une quelconque des revendications précédentes afin de déterminer la nouvelle enveloppe virtuelle dudit équipement déplacé.

14. Procédé selon l'une quelconque des revendications précédentes, comprenant une étape d'enrichissement contextuel d'un équipement à commander par des données d'enrichissement et en ce que l'étape de détermination d'un équipement à commander met en oeuvre cet enrichissement contextuel, ledit enrichissement mettant de préférence en oeuvre des données de grandeurs physiques, l'heure, la date, la position de l'objet de commande, des réponses de l'utilisateur à des questions, ou la répétitivité de commandes effectuées par l'utilisateur.

15. Procédé de commande d'un équipement à commander parmi au moins un équipement à commander à partir d'un objet de commande, **caractérisé en ce qu'**il comprend une étape de détermination d'un équipement à commander selon un procédé selon l'une quelconque des revendications 1 à 14 et une étape d'émission par l'objet de commande de données de commande à destination de l'équipement à commander.

16. Procédé de commande selon la revendication précédente, dans lequel l'étape de détermination de la position et de l'orientation de l'objet de commande et l'étape d'émission par l'objet de commande de données de commande à destination de l'équipement à commander mettent en oeuvre une même technologie radio.

17. Procédé de commande selon la revendication 15 ou 16, **caractérisé en ce que** l'objet de commande émet automatiquement des commandes à destination d'un équipement en fonction de sa position et de son orientation dans l'espace.

18. Procédé de commande selon l'une quelconque des revendications 15 à 17, **caractérisé en ce que** l'étape de commande d'un équipement à commander est suivie d'une étape de confirmation et/ou d'une étape d'infirmation par l'utilisateur de l'équipement à commander ainsi déterminé grâce à une interaction prédéfinie de l'utilisateur avec l'objet de commande et dans lequel, postérieurement à l'étape d'infirmation de l'équipement à commander, une nouvelle étape de détermination d'un équipement à commander est automatiquement mise en oeuvre par ledit procédé de commande.

19. Procédé de commande selon l'une quelconque des revendications 15 à 18, comprenant une étape de découverte automatique pour découvrir chacun des équipements à commander.

20. Procédé de commande selon l'une quelconque des revendications 15 à 19, comprenant une adaptation d'une interface de commande de l'objet de commande en fonction de l'équipement à commander.

21. Procédé de commande selon l'une quelconque des revendications 15 à 20, comprenant une interprétation par une surface tactile d'au moins un mouvement d'au moins un doigt d'un utilisateur sur ladite surface et en ce que les données de commande sont générées à partir de cette interprétation.

22. Procédé de commande selon l'une quelconque des revendications 15 à 21, comprenant un affichage par l'interface de commande d'une information en fonction de l'équipement déterminé.

23. Utilisation d'un procédé de commande **caractérisé en ce qu'**il met en oeuvre un procédé de commande selon l'une quelconque des revendications 15 à 22.

24. Utilisation selon la revendication 23, comprenant une détection d'une grandeur physique telle que l'accélération de l'objet de commande ou d'une action prédéfinie par l'utilisateur.

25. Utilisation selon la revendication précédente, comprenant une gestion d'un afficheur de l'objet de commande à partir de cette détection.

26. Utilisation selon l'une quelconque des revendications 23 à 25, comprenant une pluralité de mise en oeuvre automatique du procédé de commande selon l'une quelconque des revendications 15 à 22.

27. Utilisation selon l'une quelconque des revendications 23 à 26, comprenant une étape de définition de données d'habitudes et en ce qu'elle comprend une pluralité de mise en oeuvre du procédé de commande en fonction desdites données d'habitudes.

28. Utilisation selon la revendication précédente, comprenant une étape d'apprentissage d'habitudes de commandes exécutées par l'utilisateur pour définir les données d'habitudes.

29. Utilisation selon la revendication précédente, dans laquelle l'étape d'apprentissage d'habitudes de commandes exécutées par l'utilisateur comprend une étape d'enrichissement contextuel par des données d'enrichissement, ledit enrichissement contextuel mettant de préférence en oeuvre des données de grandeurs physiques, l'heure, la date, la position de l'objet de commande, des réponses de l'utilisateur à des questions, ou la répétitivité de commandes effectuées par l'utilisateur.

30. Dispositif de commande d'au moins un équipement à commander dans un espace par au moins un objet de commande transportable, ledit dispositif étant **caractérisé en ce qu'**il comprend :
- des moyens de définition d'une enveloppe virtuelle d'au moins un équipement à commander, l'enveloppe virtuelle de l'au moins un équipement à commander ne comprenant aucun point de l'enveloppe physique de l'équipement à commander,
- des moyens de détermination de la position et de l'orientation dudit au moins un objet de commande transportable dans ledit espace relativement à au moins une unité de positionnement,
- des moyens de détermination d'une direction et d'un sens pointé par ledit au moins un objet de commande à partir de la position et de l'orientation de cet objet de commande ainsi déterminées,
- des moyens de détermination d'un équipement à commander à partir de la direction et du sens ainsi déterminés,
- des moyens d'émission configurés pour émettre une commande à destination de l'équipement à commander déterminé par les moyens de détermination
- les moyens de détermination d'un équipement à commander étant configurés pour utiliser l'enveloppe virtuelle définie pour l'au moins un équipement à commander.

31. Dispositif de commande selon la revendication 30, comprenant en outre une surface tactile et des moyens d'interprétation pour interpréter au moins un mouvement d'au moins un doigt d'un utilisateur sur ladite surface tactile, les moyens d'émission étant en outre configurés pour générer la commande à partir de données provenant desdits moyens d'interprétation.

32. Dispositif selon la revendication 30 ou 31, comprenant en outre un afficheur configuré pour afficher des informations relatives à l'équipement à commander ainsi déterminé.

33. Dispositif de commande selon la revendication précédente, comprenant un capteur de son et des moyens d'analyses configurés pour déterminer un résultat en fonction du son capté par ledit capteur de son et afficher ce résultat sur l'afficheur.

34. Système comprenant :
- au moins un objet de commande transportable disposé dans un espace,
- au moins une unité de positionnement dans cet espace, l'au moins une unité de positionnement étant apte à déterminer la position de l'objet de commande et/ou sa position relative par rapport à d'autres unités de positionnement,
- un dispositif de commande d'au moins un équipement à commander selon l'une des revendications 30 à 33.

35. Système selon la revendication précédente, dans lequel des moyens de communication compris dans l'objet de commande et/ou l'au moins une unité de positionnement et/ou le dispositif de commande sont configurés pour mettre en oeuvre une même technologie radio.

36. Système selon la revendication 34 ou 35, **caractérisé en ce qu'**au moins une unité de positionnement est intégrée à un équipement à commander.

37. Système selon l'une quelconque des revendications 34 à 36, dans lequel le dispositif de commande est intégré à l'au moins un objet de commande.

38. Système selon l'une quelconque des revendications 34 à 37, dans lequel le dispositif de commande est intégré à au moins une unité de positionnement.

39. Système selon l'une quelconque des revendications 34 à 38, dans lequel le dispositif de commande est intégré à l'équipement à commander.

40. Système selon l'une quelconque des revendications 34 à 39, comprenant une passerelle réseau configurée pour détecter automatiquement chacun des équipements à commander.

41. Système selon l'une quelconque des revendications 34 à 40, comprenant une passerelle réseau comprenant le dispositif de commande, ledit dispositif de commande étant relié via ladite passerelle réseau par une liaison filaire ou sans-fil à l'objet de commande et/ou à l'au moins une unité de positionnement.

42. Système selon l'une quelconque des revendications 34 à 41, dans lequel la passerelle réseau est configurée pour commander séquentiellement au moins une partie des équipements à commander.

43. Système selon l'une quelconque des revendications 34 à 42, dans lequel l'objet de commande est muni de moyens de stockage d'énergie rechargeable et en ce que le système comprend en outre une base apte à recharger lesdits moyens de stockage d'énergie.

44. Système selon l'une quelconque des revendications 34 à 43, dans lequel l'objet de commande est un téléphone comprenant les moyens d'émission du dispositif de commande.

45. Système selon l'une quelconque des revendications 34 à 44, dans lequel l'objet de commande comprend un téléphone muni d'un accessoire, l'objet de commande comprenant les moyens d'émission du dispositif de commande.

## Patentansprüche

1. Verfahren zum Erkennen einer Einrichtung, die über ein transportables Steuerobjekt zu steuern ist, das in einem Raum angeordnet ist, der zumindest eine Positionierungseinheit enthält, die dazu geeignet ist, die relative Position des Steuerobjekts in Bezug auf diese Positionierungseinheit zu erkennen, wobei das Verfahren umfasst:
- einen Schritt des Definierens einer virtuellen Hülle zumindest einer zu steuernden Einrichtung, wobei die virtuelle Hülle der zumindest einen zu steuernden Einrichtung keinen Punkt der physischen Hülle der zu steuernden Einrichtung enthält,
- einen Schritt des Erkennens der Position und der Ausrichtung des Steuerobjekts in dem Raum ausgehend von der Position der zumindest einen Positionierungseinheit,
- einen Schritt des Erkennens einer Richtung und einer von dem Steuerobjekt angepeilten Richtung ausgehend von der so erkannten Position und Ausrichtung des Steuerobjekts,
- einen Schritt des Erkennens einer zu steuernden Einrichtung in dem Raum ausgehend von der so erkannten Richtung und Peilrichtung,
wobei bei dem Schritt des Erkennens einer zu steuernden Einrichtung die für zumindest eine zu steuernde Einrichtung definierte virtuelle Hülle verwendet wird.

2. Verfahren nach Anspruch 1, wobei der Raum eine Mehrzahl von Positionierungseinheiten enthält, die dazu geeignet sind, deren relative Positionen zueinander zu erkennen.

3. Verfahren nach Anspruch 1 oder 2, wobei der Schritt des Erkennens der Position und/oder der Schritt des Erkennens der Ausrichtung des Steuerobjekts in dem Raum einen Schritt des Auswertens der Laufzeit eines Funksignals zwischen dem Steuerobjekt und einer Positionierungseinheit oder zwischen mehreren Positionierungseinheiten umfasst.

4. Verfahren nach einem der vorangehenden Ansprüche, wobei der Schritt des Erkennens der Position und/oder der Schritt des Erkennens der Ausrichtung des Steuerobjekts in dem Raum einen Schritt des Auswertens der Empfangsleistung eines Funksignals über das Steuerobjekt oder über die zumindest eine Positionierungseinheit umfasst.

5. Verfahren nach einem der vorangehenden Ansprüche, wobei der Schritt des Erkennens der Position und/oder der Schritt des Erkennens der Ausrichtung des Steuerobjekts in dem Raum einen Schritt des Erkennens der Empfangswinkel eines Funksignals über das Steuerobjekt oder über die zumindest eine Positionierungseinheit umfasst.

6. Verfahren nach einem der vorangehenden Ansprüche, wobei der Schritt des Erkennens der Position und/oder der Schritt des Erkennens der Ausrichtung des Steuerobjekts in dem Raum einen Schritt der Triangulation, Lateration, Trilateration oder Multilateration umfasst.

7. Verfahren nach einem der vorangehenden Ansprüche, umfassend einen Schritt, der eine Erfassung von physikalischen Größen in dem Raum über das Steuerobjekt umfasst.

8. Verfahren nach einem der vorangehenden Ansprüche, umfassend einen Schritt, der eine Erfassung des Abstands zwischen dem Steuerobjekt und einem Hindernis, das sich in der von dem Steuerobjekt angepeilten Richtung befindet, mittels des Steuerobjekts umfasst.

9. Verfahren nach einem der vorangehenden Ansprüche, umfassend einen Schritt, um ein mit dem Steuerobjekt zusammenhängendes Bezugssystem einem mit der zumindest einen Positionierungseinheit zusammenhängenden Bezugssystem zuzuordnen.

10. Verfahren nach dem vorangehenden Anspruch, wobei der Schritt des Zuordnens des mit dem Steuerobjekt zusammenhängenden Bezugssystems zu dem mit der zumindest einen Positionierungseinheit zusammenhängenden Bezugssystem für jede der Positionierungseinheiten einen Schritt umfasst, der ein Anpeilen einer Positionierungseinheit durch den Benutzer dieses Steuerobjekts und ein Drücken des Benutzers auf das Steuerobjekt umfasst.

11. Verfahren nach einem der vorangehenden Ansprüche, **dadurch gekennzeichnet, dass** die virtuelle Hülle der zumindest einen zu steuernden Einrichtung ausgehend von einer Mehrzahl von Erkennungen der Position und der Ausrichtung des Steuerobjekts in dem Raum definiert wird.

12. Verfahren nach dem vorangehenden Anspruch, wobei der Schritt des Erkennens der virtuellen Hülle einen Schritt des Aktivierens von zumindest einer der zu steuernden Einrichtungen umfasst, um sie für einen Benutzer visuell erkennbar zu machen, sowie einen Schritt, der ein Anpeilen durch den Benutzer des Steuerobjekts zu dieser zumindest einen Einrichtung hin und ein Drücken des Benutzers auf das Steuerobjekt umfasst.

13. Verfahren nach einem der vorangehenden Ansprüche, umfassend einen Schritt des Verlagerns einer zu steuernden Einrichtung und eine Aktion eines Benutzers auf das Steuerobjekt, wobei der Aktion des Benutzers auf das Steuerobjekt ein erneutes Durchführen eines Verfahrens nach einem der vorangehenden Ansprüche folgt, um die neue virtuelle Hülle der verlagerten Einrichtung zu erkennen.

14. Verfahren nach einem der vorangehenden Ansprüche, umfassend einen Schritt der kontextuellen Anreicherung einer zu steuernden Einrichtung mit Anreicherungsdaten, wobei bei dem Schritt des Erkennens einer zu steuernden Einrichtung diese kontextuelle Anreicherung durchgeführt wird, wobei die Anreicherung vorzugsweise Daten physikalischer Größen, Uhrzeit, Datum, Position des Steuerobjekts, Antworten des Benutzers auf Fragen oder die Wiederholbarkeit von von dem Benutzer erteilten Befehlen verwendet.

15. Verfahren zum Steuern einer zu steuernden Einrichtung aus zumindest einer ausgehend von einem Steuerobjekt zu steuernden Einrichtung, **dadurch gekennzeichnet, dass** es einen Schritt des Erkennens einer zu steuernden Einrichtung mit einem Verfahren nach einem der Ansprüche 1 bis 14 und einen Schritt des Ausgebens von Steuerdaten an die zu steuernde Einrichtung durch das Steuerobjekt umfasst.

16. Steuerungsverfahren nach dem vorangehenden Anspruch, wobei bei dem Schritt des Erkennens der Position und der Ausrichtung des Steuerobjekts und bei dem Schritt des Ausgebens von Steuerdaten an die zusteuernde Einrichtung durch das Steuerobjekt dieselbe Funktechnologie verwendet wird.

17. Steuerungsverfahren nach Anspruch 15 oder 16, **dadurch gekennzeichnet, dass** das Steuerobjekt automatisch Befehle an eine Einrichtung in Abhängig von seiner Position und seiner Ausrichtung im Raum erteilt.

18. Steuerungsverfahren nach einem der Ansprüche 15 bis 17, **dadurch gekennzeichnet, dass** dem Schritt des Steuerns einer zu steuernden Einrichtung ein Schritt der Bestätigung und/oder Ablehnung durch den Benutzer der so erkannten, zu steuernden Einrichtung durch eine vordefinierte Interaktion des Benutzers mit dem Steuerobjekt folgt, wobei nach dem Schritt der Ablehnung der zu steuernden Einrichtung ein erneuter Schritt des Erkennens einer zu steuernden Einrichtung automatisch durch das Steuerungsverfahren ausgeführt wird.

19. Steuerungsverfahren nach einem der Ansprüche 15 bis 18, umfassend einen Schritt der automatischen Ermittlung, um jede der zu steuernden Einrichtungen zu ermitteln.

20. Steuerungsverfahren nach einem der Ansprüche 15 bis 19, umfassend ein Anpassen einer Steuerschnittstelle des Steuerobjekts in Abhängigkeit von der zu steuernden Einrichtung.

21. Steuerungsverfahren nach einem der Ansprüche 15 bis 20, umfassend eine durch eine Berührungsfläche erfolgende Interpretation von zumindest einer Bewegung zumindest eines Fingers eines Benutzers auf der Fläche, wobei die Steuerungsdaten ausgehend von dieser Interpretation erzeugt werden.

22. Steuerungsverfahren nach einem der Ansprüche 15 bis 21, umfassend ein Anzeigen einer Information durch die Steuerschnittstelle in Abhängigkeit von der erkannten Einrichtung.

23. Verwendung eines Steuerungsverfahrens, **dadurch gekennzeichnet dass** ein Steuerungsverfahren nach einem der Ansprüche 15 bis 22 durchgeführt wird.

24. Verwendung nach Anspruch 23, umfassend ein Erfassen einer physikalischen Größe, wie etwa die Beschleunigung des Steuerobjekts oder eine vorbestimmte Aktion durch den Benutzer.

25. Verwendung nach dem vorangehenden Anspruch, umfassend ein Verwalten einer Anzeige des Steuerobjekts ausgehend von dieser Erfassung.

26. Verwendung nach einem der Ansprüche 23 bis 25, umfassend eine Vielzahl von automatischen Durchführungen des Steuerungsverfahrens nach einem der Ansprüche 15 bis 22.

27. Verwendung nach einem der Ansprüche 23 bis 26, umfassend einen Schritt des Definierens von Gewohnheitsdaten, wobei sie eine Vielzahl von Durchführungen des Steuerungsverfahrens in Abhängigkeit von den Gewohnheitsdaten umfasst.

28. Verwendung nach dem vorangehenden Anspruch, umfassend einen Schritt des Einlernens von Gewohnheiten bei vom Benutzer erteilten Befehlen, um die Gewohnheitsdaten zu definieren.

29. Verwendung nach dem vorangehenden Anspruch, wobei der Schritt des Einlernens von Gewohnheiten bei vom Benutzer erteilten Befehlen einen Schritt der kontextuellen Anreicherung mit Anreicherungsdaten umfasst, wobei die kontextuelle Anreicherung vorzugsweise Daten physikalischer Größen, Uhrzeit, Datum, Position des Steuerobjekts, Antworten des Benutzers auf Fragen oder die Wiederholbarkeit von von dem Benutzer erteilten Befehlen verwendet.

30. Steuervorrichtung zum Steuern zumindest einer zu steuernden Einrichtung in einem Raum über zumindest ein transportables Steuerobjekt, wobei die Vorrichtung **dadurch gekennzeichnet ist, dass** sie enthält:
- Mittel zum Definieren einer virtuellen Hülle zumindest einer zu steuernden Einrichtung, wobei die virtuelle Hülle der zumindest einen zu steuernden Einrichtung keinen Punkt der physischen Hülle der zu steuernden Einrichtung enthält,
- Mittel zum Erkennen der Position und der Ausrichtung des zumindest einen transportablen Steuerobjekts in dem Raum bezüglich zumindest einer Positionierungseinheit,
- Mittel zum Erkennen einer Richtung und einer von dem zumindest einen Steuerobjekt angepeilten Richtung ausgehend von der so erkannten Position und Ausrichtung dieses Steuerobjekts,
- Mittel zum Erkennen einer zu steuernden Einrichtung ausgehend von der so erkannten Richtung und Peilrichtung,
- Ausgabemittel, die dazu ausgelegt sind, einen Befehl an die von den Erkennungsmitteln erkannte, zu steuernde Einrichtung auszugeben,
- wobei die Mittel zum Erkennen einer zu steuernden Einrichtung dazu ausgelegt sind, die virtuelle Hülle zu verwenden, die für die zumindest eine zu steuernde Einrichtung definiert ist.

31. Steuervorrichtung nach Anspruch 30, ferner enthaltend eine Berührungsfläche und Interpretationsmittel zur Interpretation von zumindest einer Bewegung zumindest eines Fingers eines Benutzers auf der Berührungsfläche, wobei die Ausgabemittel ferner dazu ausgelegt sind, den Befehl ausgehend von von diesen Interpretationsmitteln stammenden Daten zu erzeugen.

32. Vorrichtung nach Anspruch 30 oder 31, ferner umfassend eine Anzeige, die dazu ausgelegt ist, Informationen über die so erkannte zu steuernde Einrichtung anzuzeigen.

33. Steuervorrichtung nach dem vorangehenden Anspruch, enthaltend einen Schallsensor und Analysemittel, die dazu ausgelegt sind, ein Ergebnis in Abhängigkeit vom von dem Schallsensor erfassten Schall zu ermitteln und dieses Ergebnis auf der Anzeige anzuzeigen.

34. System, enthaltend:
- zumindest ein transportables Steuerobjekt, das in einem Raum angeordnet ist,
- zumindest eine Positionierungseinheit in diesem Raum, wobei die zumindest eine Positionierungseinheit dazu geeignet ist, die Position des Steuerobjekts und/oder seine relative Position bezüglich weiterer Positionierungseinheiten zu erkennen,
- eine Steuervorrichtung zum Steuern zumindest einer zu steuernden Einrichtung nach einem der Ansprüche 30 bis 33.

35. System nach dem vorangehenden Anspruch, wobei in dem Steuerobjekt und/oder der zumindest einen Positionierungseinheit und/oder der Steuervorrichtung enthaltende Kommunikationsmittel dazu ausgelegt sind, dieselbe Funktechnologie anzuwenden.

36. System nach Anspruch 34 oder 35, **dadurch gekennzeichnet, dass** zumindest eine Positionierungseinheit in einer zu steuernden Einrichtung integriert ist.

37. System nach einem der Ansprüche 34 bis 36, wobei die Steuervorrichtung in dem zumindest einen Steuerobjekt integriert ist.

38. System nach einem der Ansprüche 34 bis 37, wobei die Steuervorrichtung in zumindest einer Positionierungseinheit integriert ist.

39. System nach einem der Ansprüche 34 bis 38, wobei die Steuervorrichtung in der zu steuernden Einrichtung integriert ist.

40. System nach einem der Ansprüche 34 bis 39, enthaltend ein Netzwerk-Gateway, das dazu ausgelegt ist, jede der zu steuernden Einrichtungen automatisch zu erfassen.

41. System nach einem der Ansprüche 34 bis 40, enthaltend ein Netzwerk-Gateway, das die Steuervorrichtung enthält, wobei die Steuervorrichtung durch das Netzwerk-Gateway über eine drahtgebundene oder drahtlose Verbindung mit dem Steuerobjekt und/oder mit der zumindest einen Positionierungseinheit verbunden ist.

42. System nach einem der Ansprüche 34 bis 41, wobei das Netzwerk-Gateway dazu ausgelegt ist, zumindest einen Teil der zu steuernden Einrichtungen sequentiell zu steuern.

43. System nach einem der Ansprüche 34 bis 42, wobei das Steuerobjekt mit wiederaufladbaren Energiespeichmitteln versehen ist und wobei das System ferner eine Basis enthält, die dazu geeignet ist, die Energiespeichermittel wiederaufzuladen.

44. System nach einem der Ansprüche 34 bis 43, wobei das Steuerobjekt ein Telefon ist, das die Ausgabemittel der Steuervorrichtung enthält.

45. System nach einem der Ansprüche 34 bis 44, wobei das Steuerobjekt ein Telefon enthält, das mit einem Zubehörteil versehen ist, wobei das Steuerobjekt die Ausgabemittel der Steuervorrichtung enthält.

## Claims

1. Method for the determination of a piece of equipment to be controlled by a portable control object placed in a space comprising at least one positioning unit capable of determining the relative position of said control object with respect to this positioning unit, the method comprising:
- a step for defining a virtual envelope of at least one piece of equipment to be controlled, the virtual envelope of the at least one piece of equipment to be controlled does not comprise any point of the physical envelope of the piece of equipment to be controlled,
- a step of determination of the position and orientation of said control object in said space based on said position of said at least one positioning unit,
- a step of determination of a direction and a sense of pointing by said control object based on said position and orientation of said control object that have been determined in this way,
- a step of determination of a piece of equipment to be controlled in the space based on the direction and sense that have been determined in this way,
the step of determination of a piece of equipment to be controlled using the virtual envelope defined for at least one piece of equipment to be controlled.

2. Method according to claim 1, wherein the space comprises a plurality of positioning units capable of determining their relative positions in relation to one another.

3. Method according to claim 1 or 2, wherein the step of determination of the position and/or the step of determination of the orientation of the control object in said space comprises a step of assessing the travel time of a radio signal between the control object and a positioning unit, or between several positioning units.

4. Method according to any one of preceding claims, wherein the step of determination of the position and/or the step of determination of the orientation of the control object in said space comprises a step of assessing the received power of a radio signal by the control object or by the at least one positioning unit.

5. Method according to any one of preceding claims, wherein the step of determination of the position and/or the step of determination of the orientation of the control object in said space comprises a step of determination of the angles of reception of a radio signal by the control object or by the at least one positioning unit.

6. Method according to any one of preceding claims, wherein the step of determination of the position and/or the step of determination of the orientation of the control object in said space implements a step of triangulation, lateration, trilateration or multilateration.

7. Method according to any one of preceding claims, comprising a step implementing a capture by the control object of physical variables in the space.

8. Method according to any one of preceding claims, comprising a step implementing a capture by the control object of the distance between the latter and an obstacle situated in the direction in which the control object is pointed.

9. Method according to any one of preceding claims, comprising a step for associating a frame of reference linked to the control object with a frame of reference linked to the at least one positioning unit.

10. Method according to preceding claim, wherein the step of associating the frame of reference linked to the control object with the frame of reference linked to the at least one positioning unit comprises for each of the positioning units a step comprising the user pointing this control object at a positioning unit and pressing on the control object.

11. Method according to any one of preceding claims, **characterized in that** the virtual envelope of the at least one piece of equipment to be controlled is defined on the basis of a plurality of determinations of position and orientation of the control object in the space.

12. Method according to preceding claim, wherein the step of determination of the virtual envelope comprises a step of activation of at least one of the pieces of equipment to be controlled in order to render it visually identifiable by the user and a step comprising the user pointing the control object at this at least one piece of equipment and pressing on the control object.

13. Method according to any one of preceding claims, comprising a step of moving a piece of equipment to be controlled and an action of a user on the control object, the action of the user on the control object being followed by a new implementation of a method according to any one of the preceding claims in order to determine the new virtual envelope of said moved piece of equipment.

14. Method according to any one of preceding claims, **characterized in that** it comprises a step of contextual enhancement of a piece of equipment to be controlled by enrichment data, and **in that** the step of determination of a piece of equipment to be controlled implements this contextual enhancement, said enhancement preferably implementing data of physical variables, time, date, the position of the control object, responses of the user to questions, or the pattern of repetition of commands carried out by the user.

15. Method for controlling a piece of equipment to be controlled among at least one piece of equipment to be controlled from a control object, **characterized in that** it comprises a step of determination of a piece of equipment to be controlled according to a method according to any one of claims 1 to 14 and a step of transmission by the control object of control data to the piece of equipment to be controlled.

16. Control method according to preceding claim, **characterized in that** the step of determination of the position and the orientation of the control object and the step of transmission by the control object of control data to the piece of equipment to be controlled utilize one and the same radio technology.

17. Control method according to claim 15 or 16, **characterized in that** the control object automatically transmits commands to a piece of equipment as a function of its position and its orientation in the space.

18. Control method according to claim 15 to 17, **characterized in that** the control step of a piece of equipment to be controlled is followed by a step of confirmation and/or a step of invalidation by the user of the thus-determined piece of equipment to be controlled, using a predefined interaction of the user with the control object and wherein, after a step of invalidation of the piece of equipment to be controlled, a new step of determination of a piece of equipment to be controlled is automatically implemented by said control method.

19. Control method according to any one of claims 15 to 18, comprising a step of automatic discovery for discovering each of the pieces of equipment to be controlled.

20. Control method according to any one of claims 15 to 19, comprising an adaptation of a control interface of the control object as a function of the piece of equipment to be controlled.

21. Control method according to any one of claims 15 to 20, comprising an interpretation by a touch-sensitive surface of at least one movement of at least one finger of a user on said surface and in that the control data are generated based on this interpretation.

22. Control method according to any one of claims 15 to 21, comprising a display of information by the control interface as a function of the piece of equipment determined.

23. Use of a control method **characterized in that** it implements a control method according to any one of claims 15 to 22.

24. Use according to the claim 23, comprising a detection of physical variable such as the acceleration of the control object or a predefined action by the user.

25. Use according to preceding claim, comprising a management of a screen of the control object based on this detection.

26. Use according to any one of claims 23 to 25, comprising a plurality of automatic implementations of the control method according to any one of claims 15 to 22.

27. Use according to any one of claims 23 to 26, comprising a step of definition of habit data and in that it comprises a plurality of implementations of the control method as a function of said habit data.

28. Use according to preceding claim, comprising a step of training of habits of commands carried out by the user in order to define the habit data.

29. Use according to preceding claim, wherein the step of training of habits of commands executed by the user comprises a step of contextual enhancement by enrichment data, said contextual enhancement preferably implementing data of physical variables, time, date, the position of the control object, responses of the user to questions, or the pattern of repetition of commands carried out by the user.

30. Control device of at least one piece of equipment to be controlled in a space by at least one portable control object, said device being **characterized in that** it comprises:
- Means for definition of a virtual envelope of at least one piece of equipment to be controlled, the virtual envelope of the at least one piece of equipment to be controlled does not comprise any point of the physical envelope of the piece of equipment to be controlled
- means for the determination of the position and orientation of said at least one transportable control object in said space relative to at least one positioning unit,
- means for the determination of a direction and a sense of pointing by said at least one control object based on the position and orientation of this control object that have been determined in this way,
- means for the determination of a piece of equipment to be controlled based on the direction and the sense that have been determined in this way,
- transmission means configured to send a command to the piece of equipment to be controlled determined by the determination means,
- means for determination of a piece of equipment to be controlled being configured for using the virtual envelope defined for at least one piece of equipment to be controlled.

31. Control device according to claim 30, further comprising a touch-sensitive surface and interpretation means in order to interpret at least one movement of at least one finger of a user on said touch-sensitive surface, the transmission also being configured to generate the command from data originating from said interpretation means.

32. Device according to claim 30 or 31, comprising a screen configured to display information relating to the piece of equipment to be controlled, determined in this way.

33. Control device according to the preceding claim, comprising a sound sensor and analysis means configured to determine a result as a function of the sound captured by said sound sensor and to display this result on the screen.

34. System comprising:
- at least one portable control object arranged in a space,
- at least one positioning unit in this space, the at least one positioning unit being capable of determining the position of the control object and/or its relative position with respect to other positioning units,
- control device of at least one piece of equipment to be controlled according to one of claims 30 to 33.

35. System according to preceding claim, wherein communication means comprised in the control object and/or the at least one positioning unit and/or the control device are configured to utilize one and the same radio technology.

36. System according to claim 34 or 35, **characterized in that** the at least one positioning unit is incorporated into a piece of equipment to be controlled.

37. System according to claim 34 to 36, wherein the control device is incorporated into the at least one control object.

38. System according to claim 34 to 37, wherein the control device is incorporated into at least one positioning unit.

39. System according to any one of claims 34 to 38, comprising the control device is incorporated into the piece of equipment to be controlled.

40. System according to any one of claims 34 to 39, comprising a network gateway configured to automatically detect each of the pieces of equipment to be controlled.

41. System according to any one of claims 34 to 40, comprising a network gateway comprising the control device, said control device being connected via said network gateway by a wired or wireless connection to the control object and/or to the at least one positioning unit.

42. System according to any one of claims 34 to 41, wherein the network gateway is configured to control sequentially at least a part of the pieces of equipment to be controlled.

43. System according to any one of claims 34 to 42, wherein the control object is equipped with rechargeable power storage means, and in that the system also comprises a base capable of recharging said power storage means.

44. System according to any one of claims 34 to 43, wherein the control object is a telephone comprising the transmission means of the control device.

45. System according to any one of claims 34 to 44, wherein the control object comprises a telephone equipped with an accessory, the control object comprising the transmission means of the control device.
